# EUROPEAN PATENT APPLICATION

(11) **EP 4 521 806 A1**
(43) Date of publication of application: **12.03.2025**
(21) Application number: 23834729.8
(22) Date of filing: 29.06.2023
(51) Int. Cl.: H04W 24/02

(54) **DATA QUERY METHOD, APPARATUS AND SYSTEM**

(30) Priority: 05.07.2022 CN 202210793373
(71) Applicant: Huawei Technologies Co., Ltd., Shenzhen, Guangdong 518129 (CN)
(72) Inventor: ZHAO, Xian, Shenzhen, Guangdong 518129 (CN); CAO, Longyu, Shenzhen, Guangdong 518129 (CN)
(74) Representative: MERH-IP Matias Erny Reichl Hoffmann Patentanwälte PartG mbB
(86) International application number: PCT/CN2023/104064
(87) International publication number: WO 2024/007962

(57) **Abstract**

This application relates to the field of wireless communication technologies, and provides a data query method, an apparatus, and a system, to expose terminal device-level or communication service-level radio network performance data. In the method, a first identifier and data type information from a third-party server are received, where the first identifier identifies a terminal device or a communication service outside an access network device. A second identifier is obtained based on the first identifier, where the second identifier identifies the terminal device or the communication service inside the access network device. Target radio network performance data is obtained based on the second identifier. The target radio network performance data is sent to the third-party server. According to the foregoing solution, the third-party server may request, via the first identifier, to query for the radio network performance data about the terminal device or the communication service, to optimize a service or an application service. In addition, because a core network device cannot obtain the radio network performance data, data security of the terminal device or the communication service can be improved.

## Description

### CROSS-REFERENCE TO RELATED APPLICATIONS

This application claims priority to Chinese Patent Application No. 202210793373.3, filed with the China National Intellectual Property Administration on July 5, 2022 and entitled "DATA QUERY METHOD, APPARATUS, AND SYSTEM", which is incorporated herein by reference in its entirety.

### TECHNICAL FIELD

This application relates to the field of wireless communication technologies, and in particular, to a data query method, an apparatus, and a system.

### BACKGROUND

In a scenario in which an information exposure service is provided for a vertical industry, for radio network information, coarse granularity-level exposure is currently supported. For example, in a scenario of machine-vision-based quality inspection on an industrial production line, to adjust bandwidth of a terminal device (for example, a camera), adjustment may be performed on cameras in a same cell together. However, this may result in an increase in bandwidth of a camera whose shot does not include a product processing action, and result in unnecessary bandwidth consumption; or result in a decrease in bandwidth of a camera whose shot includes a product processing action that is being performed, result in reduction of video quality, and affect production efficiency of the production line. Consequently, a service requirement of the vertical industry cannot be satisfied.

### SUMMARY

This application provides a data query method, an apparatus, and a system, to expose terminal device-level or communication service-level radio network performance data.

According to a first aspect, a data query method is provided. The method may be performed by a communication device or a chip having a function similar to that of the communication device. In the method, a first identifier and data type information from a third-party server are received, where the first identifier identifies a terminal device or a communication service outside an access network device, and the data type information indicates a type of radio network performance data that is about the terminal device or the communication service and that is needed by the third-party server. A second identifier is obtained based on the first identifier, where the second identifier identifies the terminal device or the communication service inside the access network device. Target radio network performance data about the terminal device or the communication service is obtained based on the second identifier, where the target radio network performance data matches the data type information. The target radio network performance data is sent to the third-party server.

According to the foregoing solution, the third-party server may request, via the first identifier, to query for the radio network performance data about the terminal device or the communication service. **In** comparison with a case in which only coarse granularity-level radio network performance data can be queried for in a related technology, fine granularity-level radio network performance data can be obtained through query, to optimize a service or an application service. **In** addition, because a core network device cannot obtain the radio network performance data, data security of the terminal device or the communication service can be improved.

**In** a possible implementation, that a first identifier and data type information from a third-party server are received includes: A management function entity receives a service request message from the third-party server, where the service request message includes the first identifier and the data type information.

According to the foregoing solution, the third-party server may query for the radio network performance data about the terminal device or the communication service via the management function entity.

In a possible implementation, that a second identifier is obtained based on the first identifier includes: The management function entity sends the first identifier to an access and mobility management function network element. The access and mobility management function network element obtains the second identifier based on the first identifier. The management function entity receives the second identifier from the access and mobility management function network element. That target radio network performance data about the terminal device or the communication service is obtained based on the second identifier includes: The management function entity sends the second identifier and the data type information to the access network device. The management function entity receives the target radio network performance data from the access network device. That the target radio network performance data is sent to the third-party server includes: The management function entity sends a service response message to the third-party server, where the service response message includes the target radio network performance data.

According to the foregoing solution, the access and mobility management function network element may associate the first identifier with the second identifier. Because the second identifier may identify the terminal device or the communication service inside the access network device, the target radio network performance data about the terminal device or the communication service may be obtained through query by using the second identifier, to optimize the service or the application service. In addition, because the access and mobility management function network element cannot obtain the radio network performance data, the data security of the terminal device or the communication service can be improved.

In a possible implementation, the management function entity sends a first radio network performance data request message to an access and mobility management function network element, where the first radio network performance data request message includes the first identifier and the data type information. That a second identifier is obtained based on the first identifier includes: The access and mobility management function network element obtains the second identifier through query based on a correspondence between the first identifier and the second identifier. That target radio network performance data about the terminal device or the communication service is obtained based on the second identifier includes: The access network device receives a second radio network performance data request message from the access and mobility management function network element, where the second radio network performance data request message includes a return address and the second identifier, and the return address is an address of the management function entity. The access network device obtains the target radio network performance data about the terminal device or the communication service based on the second identifier. That the target radio network performance data is sent to the third-party server includes: The access network device sends the target radio network performance data to the management function entity based on the return address. The management function entity sends the target radio network performance data to the third-party server.

According to the foregoing solution, the access and mobility management function network element may associate the first identifier with the second identifier. Because the second identifier may identify the terminal device or the communication service inside the access network device, the target radio network performance data about the terminal device or the communication service may be obtained through query by using the second identifier, to optimize the service or the application service. In addition, because the access and mobility management function network element cannot obtain the radio network performance data, the data security of the terminal device or the communication service can be improved.

In a possible implementation, the management function entity sends a first radio network performance data request message to a network exposure function network element, where the first radio network performance data request message includes the first identifier and the data type information. That a second identifier is obtained based on the first identifier includes: The network exposure function network element sends the first identifier and the data type information to an access and mobility management function network element. The access and mobility management function network element obtains the second identifier through query based on a correspondence between the first identifier and the second identifier. That target radio network performance data about the terminal device or the communication service is obtained based on the second identifier includes: The access network device receives a second radio network performance data request message from the access and mobility management function network element, where the second radio network performance data request message includes a return address and the second identifier, and the return address is an address of the management function entity. The access network device obtains the target radio network performance data about the terminal device or the communication service based on the second identifier. That the target radio network performance data is sent to the third-party server includes: The access network device sends the target radio network performance data to the management function entity based on the return address. The management function entity sends the target radio network performance data to the third-party server.

According to the foregoing solution, the management function entity may request, via the network exposure function network element, the access and mobility management function network element to associate the first identifier with the second identifier, to query for the radio network performance data about the terminal device or the communication service.

In a possible implementation, that a second identifier is obtained based on the first identifier includes: The management function entity sends the first identifier and a return address to a network exposure function network element, where the return address is an address of the management function entity. An access and mobility management function network element obtains the second identifier through query based on a correspondence between the first identifier and the second identifier. The access and mobility management function network element sends the second identifier to the management function entity based on the return address. That target radio network performance data about the terminal device or the communication service is obtained based on the second identifier includes: The access network device receives the return address and the second identifier from the management function entity. The access network device obtains the target radio network performance data about the terminal device or the communication service based on the second identifier. That the target radio network performance data is sent to the third-party server includes: The access network device sends the target radio network performance data to the management function entity based on the return address. The management function entity sends the target radio network performance data to the third-party server.

According to the foregoing solution, the management function entity may request, via the network exposure function network element, the access and mobility management function network element to associate the first identifier with the second identifier, to query for the radio network performance data about the terminal device or the communication service.

In a possible implementation, that a first identifier and data type information from a third-party server are received includes: A network exposure function network element receives a second service request message from the third-party server, where the second service request message includes the first identifier and the data type information. The network exposure function network element sends the first identifier and the data type information to an access and mobility management function network element. That a second identifier is obtained based on the first identifier includes: The access and mobility management function network element obtains the second identifier through query based on a correspondence between the first identifier and the second identifier. That target radio network performance data about the terminal device or the communication service is obtained based on the second identifier includes: The access network device receives a return address and the second identifier from the access and mobility management function network element. The access network device obtains the target radio network performance data about the terminal device or the communication service based on the second identifier. That the target radio network performance data is sent to the third-party server includes: The access network device sends the target radio network performance data to a management function entity. The management function entity sends a second service response message to the third-party server, where the second service response message includes the target radio network performance data.

According to the foregoing solution, the third-party server may query for the radio network performance data about the terminal device or the communication service via the network exposure function network element.

In a possible implementation, that a management function entity receives a service request message from the third-party server includes: An exposure governance management function entity receives the service request message from the third-party server. A performance governance management function entity receives the service request message from the exposure governance management function entity.

According to the foregoing solution, the third-party server may query for the radio network performance data about the terminal device or the communication service via the exposure governance management function entity and the performance governance management function entity.

In a possible implementation, that a second identifier is obtained based on the first identifier includes: The performance governance management function entity sends the first identifier to an access and mobility management function network element. The access and mobility management function network element obtains the second identifier based on the first identifier. The performance governance management function entity receives the second identifier from the access and mobility management function network element. That target radio network performance data about the terminal device or the communication service is obtained based on the second identifier includes: The performance governance management function entity sends the second identifier and the data type information to the access network device. The performance governance management function entity receives the target radio network performance data from the access network device. That the target radio network performance data is sent to the third-party server includes: The performance governance management function entity sends a service response message to the exposure governance management function entity, where the service response message includes the target radio network performance data. The exposure governance management function entity sends the service response message to the third-party server.

According to the foregoing solution, the performance governance management function entity may request the access and mobility management function network element to associate the first identifier with the second identifier, to obtain the second identifier that identifies the terminal device or the communication service inside the access network device.

In a possible implementation, the performance management function entity sends a first radio network performance data request message to an access and mobility management function network element, where the first radio network performance data request message includes the first identifier and the data type information. That a second identifier is obtained based on the first identifier includes: The access and mobility management function network element obtains the second identifier through query based on a correspondence between the first identifier and the second identifier. That target radio network performance data about the terminal device or the communication service is obtained based on the second identifier includes: The access network device receives a second radio network performance data request message from the access and mobility management function network element, where the second radio network performance data request message includes a return address and the second identifier, and the return address is an address of the management function entity. The access network device obtains the target radio network performance data about the terminal device or the communication service based on the second identifier. That the target radio network performance data is sent to the third-party server includes: The access network device sends the target radio network performance data to the management function entity based on the return address. The management function entity sends the target radio network performance data to the third-party server.

According to the foregoing solution, the performance governance management function entity may request the access and mobility management function network element to associate the first identifier with the second identifier, to query for the target radio network performance data about the terminal device or the communication service.

According to a second aspect, a data query method is provided. The method may be performed by a core network device or a chip having a function similar to that of the core network device. In the method, the core network device receives a first identifier and data type information, where the first identifier identifies a terminal device or a communication service outside an access network device, and the data type information indicates a type of radio network performance data that is about the terminal device or the communication service and that is needed by a third-party server. The core network device sends a second identifier, the data type information, and a return address to the access network device, where the second identifier identifies the terminal device or the communication service inside the access network device; and the return address is an address of a management function entity, and indicates the access network device to send target radio network performance data to the return address, where the target radio network performance data matches the data type information, the target radio network performance data belongs to the data type information, or the target radio network performance data corresponds to the data type information.

According to the foregoing solution, the third-party server may request, via the first identifier, to query for the radio network performance data about the terminal device or the communication service. In comparison with a case in which only coarse granularity-level radio network performance data can be queried for in a related technology, fine granularity-level radio network performance data can be obtained through query, to optimize a service or an application service. In addition, because the core network device cannot obtain the radio network performance data, data security of the terminal device or the communication service can be improved.

In a possible implementation, a service request message may be a hypertext transfer protocol (hypertext transfer protocol, HTTP) message.

In a possible implementation, the core network device may associate the first identifier with the second identifier, where the second identifier may be allocated by the core network device.

In a possible implementation, the first identifier is determined based on at least one of the following: a slice identifier, a service type, a service identifier, a subscription permanent identifier (subscription permanent identifier, SUPI), a generic public subscription identifier (generic public subscription identifier, GPSI), an external group identifier, and an identity address (ID address) of the terminal device.

According to the foregoing solution, the first identifier may identify the terminal device or the communication service outside the access network device. The core network device may determine the second identifier based on the first identifier, to identify the terminal device or the communication service inside the access network device. In this way, the radio network performance data about the terminal device or the communication service may be obtained through query.

In a possible implementation, the second identifier is at least one of the following: a radio network temporary identity (radio network temporary identity, RNTI), a globally unique temporary user equipment identity (globally unique temporary user equipment identity, GUTI), an internal group identifier, a 5G-system architecture evolution temporary UE identifier (5G-system architecture evolution temporary mobile station identifier, 5G-S-TMSI), an application layer protocol UE identity (protocol for NG interface UE identity, NGAP UE ID), a quality of service class identifier (quality of service class identifier, QCI), a quality of service (quality of service, QoS) parameter scalar (5QI), and single network slice selection assistance information (single network slice selection assistance information, S-NSSAI).

According to the foregoing solution, the second identifier may identify the terminal device or the communication service inside the access network device. Therefore, the access network device may query for the radio network performance data about the terminal device or the communication service based on the second identifier.

In a possible implementation, the data type information includes at least one of the following: a throughput, delay information, radio available bandwidth estimation information, delay estimation information, and high-precision timing information.

According to the foregoing solution, the third-party server may query for one or more types of radio network performance data about the terminal device or the communication service, to optimize the service or the application service.

In a possible implementation, the core network device includes an access and mobility management function network element and a network exposure function network element. The network exposure function network element receives the first identifier and the data type information from the management function entity. The network exposure function network element sends the first identifier to the access and mobility management function network element. The access and mobility management function network element determines the second identifier based on the first identifier. The access and mobility management function network element sends the second identifier, the data type information, and the return address to the access network device.

According to the foregoing solution, the network exposure function network element may receive the first identifier and the data type information from the management function entity. In addition, when the network exposure function network element can provide the radio network performance data, the network exposure function network element provides the radio network performance data corresponding to the data type information; or when the network exposure function network element cannot provide radio network performance data, the access and mobility management function network element requests the access network device to provide the radio network performance data. **In** this way, the radio network performance data that is about the terminal device or the communication service and that is from the core network device and the radio network performance data from the access network device may be provided for the third-party server.

**In** a possible implementation, the core network device includes an access and mobility management function network element. The access and mobility management function network element receives the first identifier and the data type information from the management function entity. The access and mobility management function network element determines the second identifier based on the first identifier. The access and mobility management function network element sends the second identifier, the data type information, and the return address to the access network device.

According to the foregoing solution, the access and mobility management function network element may receive the first identifier and the data type information from the management function entity, and determine the second identifier, so that the access and mobility management function network element requests the access network device to provide the radio network performance data.

In a possible implementation, the core network device includes a network exposure function network element and an access and mobility management function network element. The network exposure function network element receives the first identifier and the data type information from the third-party server. The network exposure function network element sends the first identifier and the data type information to the access and mobility management function network element. The access and mobility management function network element determines the second identifier based on the first identifier. The access and mobility management function network element sends the second identifier, the data type information, and the return address to the access network device.

According to the foregoing solution, the network exposure function network element may receive the first identifier and the data type information from the third-party server. In addition, when the network exposure function network element can provide the radio network performance data, the network exposure function network element provides the radio network performance data corresponding to the data type information; or when the network exposure function network element cannot provide radio network performance, the access and mobility management function network element requests the access network device to provide the radio network performance data. In this way, the radio network performance data that is about the terminal device or the communication service and that is from the core network device and the radio network performance data from the access network device may be provided for the third-party server.

According to a third aspect, a data query method is provided. The method may be performed by an access network device or a chip having a function similar to that of the access network device. In the method, the access network device receives a second identifier, data type information, and a return address from a core network device, where the second identifier identifies a terminal device or a communication service inside the access network device, and the data type information indicates a type of radio network performance data that is about the terminal device or the communication service and that is needed by a third-party server. The access network device queries for radio network performance data corresponding to the data type information. The access network device sends the target radio network performance data to the return address.

According to the foregoing solution, the third-party server may request, via a first identifier, to query for the radio network performance data about the terminal device or the communication service. In comparison with a case in which only coarse granularity-level radio network performance data can be queried for in a related technology, fine granularity-level radio network performance data can be obtained through query, to optimize a service or an application service. In addition, because the access network device sends the target radio network performance data to the return address, the core network device cannot obtain the radio network performance data, so that data security of the terminal device or the communication service can be improved.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may query for the radio network performance data about the terminal device or the communication service based on the second identifier.

In a possible implementation, the data type information includes at least one of the following: a throughput, delay information, radio available bandwidth estimation information, delay estimation information, and high-precision timing information.

According to the foregoing solution, the third-party server may query for one or more types of radio network performance data about the terminal device or the communication service, to optimize the service or the application service.

According to a fourth aspect, a data query method is provided. The method may be performed by a management function entity or a chip having a function similar to that of the management function entity. In the method, the management function entity receives a service request message from a third-party server, where the service request message includes a first identifier and data type information, the first identifier identifies a terminal device or a communication service outside an access network device, and the data type information indicates a type of radio network performance data that is about the terminal device or the communication service and that is needed by the third-party server. The management function entity sends the first identifier and the data type information to a core network device, to enable the core network device to trigger the access network device to provide target radio network performance data for the management function entity. The management function entity receives the target radio network performance data from the access network device. The management function entity sends the target radio network performance data to the third-party server.

According to the foregoing solution, the third-party server may request, via the first identifier, to query for the radio network performance data about the terminal device or the communication service. In comparison with a case in which only coarse granularity-level radio network performance data can be queried for in a related technology, fine granularity-level radio network performance data can be obtained through query, to optimize a service or an application service. In addition, because the access network device sends the target radio network performance data to a return address, the core network device cannot obtain the radio network performance data, so that data security of the terminal device or the communication service can be improved.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine a second identifier based on the first identifier, to identify the terminal device or the communication service inside the access network device. In this way, the radio network performance data about the terminal device or the communication service may be obtained through query.

In a possible implementation, the data type information includes at least one of the following: a throughput, delay information, radio available bandwidth estimation information, delay estimation information, and high-precision timing information.

According to the foregoing solution, the third-party server may query for one or more types of radio network performance data about the terminal device or the communication service, to optimize the service or the application service.

According to a fifth aspect, a data query method is provided. The method may be performed by a core network device or a chip having a function similar to that of the core network device. In the method, the core network device receives a first identifier from a management function entity, where the first identifier identifies a terminal device or a communication service outside an access network device. The core network device sends, to the management function entity, a second identifier corresponding to the first identifier, where the second identifier identifies the terminal device or the communication service inside the access network device.

According to the foregoing solution, the core network device may determine the second identifier based on the first identifier. In this way, a third-party server may request, via the first identifier, to query for radio network performance data about the terminal device or the communication service. In comparison with a case in which only coarse granularity-level radio network performance data can be queried for in a related technology, fine granularity-level radio network performance data can be obtained through query, to optimize a service or an application service. In addition, because the core network device cannot obtain the radio network performance data, data security of the terminal device or the communication service can be improved.

In a possible implementation, a service request message may be an HTTP message.

In a possible implementation, the core network device may associate the first identifier with the second identifier, where the second identifier may be allocated by the core network device.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine the second identifier based on the first identifier, to identify the terminal device or the communication service inside the access network device. In this way, the radio network performance data about the terminal device or the communication service may be obtained through query.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may query for the radio network performance data about the terminal device or the communication service based on the second identifier.

In a possible implementation, data type information includes at least one of the following: a throughput, delay information, radio available bandwidth estimation information, delay estimation information, and high-precision timing information.

According to the foregoing solution, the third-party server may query for one or more types of radio network performance data about the terminal device or the communication service, to optimize the service or the application service.

According to a sixth aspect, a data query method is provided. The method may be performed by a management function entity or a chip having a function similar to that of the management function entity. In the method, the management function entity receives a first identifier and data type information from a third-party server, where the first identifier identifies a terminal device or a communication service outside an access network device, and the data type information indicates a type of radio network performance data that is about the terminal device or the communication service and that is needed by the third-party server. The management function entity sends the first identifier to a core network device. The management function entity receives a second identifier from the core network device, where the second identifier identifies the terminal device or the communication service inside the access network device. The management function entity sends the second identifier and the data type information to the access network device. The management function entity receives radio network performance data from the access network device. The management function entity sends the target radio network performance data to the third-party server.

According to the foregoing solution, the third-party server may request, via the first identifier, to query for the radio network performance data about the terminal device or the communication service. In comparison with a case in which only coarse granularity-level radio network performance data can be queried for in a related technology, fine granularity-level radio network performance data can be obtained through query, to optimize a service or an application service. In addition, because the access network device sends the target radio network performance data to a return address, the core network device cannot obtain the radio network performance data, so that data security of the terminal device or the communication service can be improved.

In a possible implementation, a service request message may be an HTTP message.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine the second identifier based on the first identifier, to identify the terminal device or the communication service inside the access network device. In this way, the radio network performance data about the terminal device or the communication service may be obtained through query.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may query for the radio network performance data about the terminal device or the communication service based on the second identifier.

In a possible implementation, the data type information includes at least one of the following: a throughput, delay information, radio available bandwidth estimation information, delay estimation information, and high-precision timing information.

According to the foregoing solution, the third-party server may query for one or more types of radio network performance data about the terminal device or the communication service, to optimize the service or the application service.

In a possible implementation, the management function entity includes a performance management function entity and an exposure governance management function entity. The exposure governance management function entity receives the first identifier and the data type information from the third-party server. The exposure governance management function entity sends the first identifier and the data type information to the performance management function entity. The performance management function entity sends the first identifier to the core network device. The performance management function entity sends the second identifier and the data type information to the access network device. The performance management function entity receives the radio network performance data from the access network device. The performance management function entity sends the target radio network performance data to the exposure governance management function entity. The exposure governance management function entity sends the target radio network performance data to the third-party server.

According to the foregoing solution, the exposure governance management function entity may receive the first identifier and the data type information from the third-party server, and request the radio network performance data about the terminal device or the communication service from the performance management function entity. The performance management function entity may trigger the core network device to associate the first identifier with the second identifier. In this way, the performance management function entity may request, based on the second identifier, the access network device to query for the radio network performance data about the terminal device or the communication service.

According to a seventh aspect, a data query method is provided. The method may be performed by an access network device or a chip having a function similar to that of the access network device. In the method, the access network device receives a second identifier and data type information from a management function entity, where the second identifier identifies a terminal device or a communication service inside the access network device, and the data type information indicates a type of radio network performance data that is about the terminal device or the communication service and that is needed by a third-party server. The access network device sends target radio network performance data to the management function entity.

According to the foregoing solution, the third-party server may request, via a first identifier, to query for the radio network performance data about the terminal device or the communication service. In comparison with a case in which only coarse granularity-level radio network performance data can be queried for in a related technology, fine granularity-level radio network performance data can be obtained through query, to optimize a service or an application service. In addition, because the access network device sends the target radio network performance data to the management function entity, a core network device cannot obtain the radio network performance data, so that data security of the terminal device or the communication service can be improved.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may query for the radio network performance data about the terminal device or the communication service based on the second identifier.

In a possible implementation, the data type information includes at least one of the following: a throughput, delay information, radio available bandwidth estimation information, delay estimation information, and high-precision timing information.

According to the foregoing solution, the third-party server may query for one or more types of radio network performance data about the terminal device or the communication service, to optimize the service or the application service.

According to an eighth aspect, a data configuration method is provided. The method may be performed by a core network device or a chip having a function similar to that of the core network device. In the method, the core network device receives a first identifier, a configuration parameter type, and a value of a radio network configuration attribute, where the first identifier identifies a terminal device or a communication service outside an access network device, and the configuration parameter type indicates a type of the radio network configuration attribute that is about the terminal device or the communication service and that is needed by a third-party server. The core network device sends a second identifier, the configuration parameter type, and the value of the radio network configuration attribute to the access network device, where the second identifier identifies the terminal device or the communication service inside the access network device.

According to the foregoing solution, the third-party server may request, via the first identifier, to configure the radio network configuration attribute about the terminal device or the communication service. In comparison with a case in which only a coarse granularity-level radio network configuration attribute can be configured in a related technology, a fine granularity-level radio network configuration attribute can be configured, to optimize a service or an application service.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine the second identifier based on the first identifier, to identify the terminal device or the communication service inside the access network device. In this way, the radio network configuration attribute about the terminal device or the communication service may be configured.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may configure the radio network configuration attribute about the terminal device or the communication service based on the second identifier.

In a possible implementation, the configuration parameter type includes at least one of the following: a throughput, delay information, radio available bandwidth estimation information, delay estimation information, and high-precision timing information.

According to the foregoing solution, the third-party server may configure one or more types of radio network configuration attributes about the terminal device or the communication service, to optimize the service or the application service.

In a possible implementation, the core network device includes an access and mobility management function network element and a network exposure function network element. The network exposure function network element receives the first identifier, the configuration parameter type, and the value of the radio network configuration attribute from a management function entity. The network exposure function network element sends the first identifier to the access and mobility management function network element. The access and mobility management function network element determines the second identifier based on the first identifier.

According to the foregoing solution, the network exposure function network element may receive the first identifier and the configuration parameter type from the management function entity. In addition, when the network exposure function network element can configure the radio network configuration attribute, the network exposure function network element configures the radio network configuration attribute corresponding to the configuration parameter type; or when the network exposure function network element cannot configure radio network performance, the access and mobility management function network element requests the access network device to configure the radio network configuration attribute. In this way, the radio network configuration attribute about the terminal device or the communication service may be configured at the request of the third-party server.

In a possible implementation, the core network device includes an access and mobility management function network element. The access and mobility management function network element receives the first identifier, the configuration parameter type, and the value of the radio network configuration attribute from a management function entity. The access and mobility management function network element determines the second identifier based on the first identifier.

According to the foregoing solution, the access and mobility management function network element may receive the first identifier and the configuration parameter type from the management function entity, and determine the second identifier, so that the access and mobility management function network element requests the access network device to configure the radio network configuration attribute.

In a possible implementation, the core network device includes a network exposure function network element and an access and mobility management function network element. The network exposure function network element receives the first identifier, the configuration parameter type, and the value of the radio network configuration attribute from the third-party server. The network exposure function network element sends the first identifier, the configuration parameter type, and the value of the radio network configuration attribute to the access and mobility management function network element. The access and mobility management function network element determines the second identifier based on the first identifier. The access and mobility management function network element sends the second identifier, the configuration parameter type, and the value of the radio network configuration attribute to the access network device.

According to the foregoing solution, the network exposure function network element may receive the first identifier and the configuration parameter type from the third-party server. In addition, when the network exposure function network element can configure the radio network configuration attribute, the network exposure function network element configures the radio network configuration attribute corresponding to the configuration parameter type; or when the network exposure function network element cannot configure radio network performance, the access and mobility management function network element requests the access network device to configure the radio network configuration attribute.

According to a ninth aspect, a data configuration method is provided. The method may be performed by an access network device or a chip having a function similar to that of the access network device. The access network device receives a second identifier, a configuration parameter type, and a value of a radio network configuration attribute from a core network device, where the second identifier identifies a terminal device or a communication service inside the access network device, and the configuration parameter type indicates a type of the radio network configuration attribute that is about the terminal device or the communication service and that is needed by a third-party server. The access network device configures the radio network configuration attribute based on the value of the radio network configuration attribute.

According to the foregoing solution, the third-party server may request, via a first identifier, to configure the radio network configuration attribute about the terminal device or the communication service. In comparison with a case in which only a coarse granularity-level radio network configuration attribute can be configured in a related technology, a fine granularity-level radio network configuration attribute can be configured, to optimize a service or an application service.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may configure the radio network configuration attribute about the terminal device or the communication service based on the second identifier.

In a possible implementation, the configuration parameter type includes at least one of the following: a throughput, delay information, radio available bandwidth estimation information, delay estimation information, and high-precision timing information.

According to the foregoing solution, the third-party server may configure one or more types of radio network configuration attributes about the terminal device or the communication service, to optimize the service or the application service.

According to a tenth aspect, a data configuration method is provided. The method may be performed by a management function entity or a chip having a function similar to that of the management function entity. In the method, the management function entity receives a service request message from a third-party server, where the service request message includes a first identifier, a configuration parameter type, and a value of a radio network configuration attribute, the first identifier identifies a terminal device or a communication service outside an access network device, and the configuration parameter type indicates a type of the radio network configuration attribute that is about the terminal device or the communication service and that is needed by the third-party server. The management function entity sends the first identifier and the configuration parameter type to a core network device, to enable the core network device to trigger the access network device to configure the radio network configuration attribute.

According to the foregoing solution, the third-party server may request, via the first identifier, to configure the radio network configuration attribute about the terminal device or the communication service. In comparison with a case in which only a coarse granularity-level radio network configuration attribute can be configured in a related technology, a fine granularity-level radio network configuration attribute can be configured, to optimize a service or an application service.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine a second identifier based on the first identifier, to identify the terminal device or the communication service inside the access network device. In this way, the radio network configuration attribute about the terminal device or the communication service may be configured.

In a possible implementation, the configuration parameter type includes at least one of the following: a throughput, delay information, radio available bandwidth estimation information, delay estimation information, and high-precision timing information.

According to the foregoing solution, the third-party server may configure one or more types of radio network configuration attributes about the terminal device or the communication service, to optimize the service or the application service.

According to an eleventh aspect, a data configuration method is provided. The method may be performed by a core network device or a chip having a function similar to that of the core network device. In the method, the core network device receives a first identifier from a management function entity, where the first identifier identifies a terminal device or a communication service outside an access network device. The core network device sends, to the management function entity, a second identifier corresponding to the first identifier, where the second identifier identifies the terminal device or the communication service inside the access network device.

According to the foregoing solution, the core network device may determine the second identifier based on the first identifier. In this way, a third-party server may request, via the first identifier, to configure a radio network configuration attribute about the terminal device or the communication service. In comparison with a case in which only a coarse granularity-level radio network configuration attribute can be configured in a related technology, the radio network configuration attribute about the terminal device or the communication service can be configured, to optimize a service or an application service.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine the second identifier based on the first identifier, to identify the terminal device or the communication service inside the access network device. In this way, the radio network configuration attribute about the terminal device or the communication service may be configured.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may configure the radio network configuration attribute about the terminal device or the communication service based on the second identifier.

In a possible implementation, a configuration parameter type includes at least one of the following: a throughput, delay information, radio available bandwidth estimation information, delay estimation information, and high-precision timing information.

According to the foregoing solution, the third-party server may configure one or more types of radio network configuration attributes about the terminal device or the communication service, to optimize the service or the application service.

According to a twelfth aspect, a data configuration method is provided. The method may be performed by a management function entity or a chip having a function similar to that of the management function entity. In the method, the management function entity receives a first identifier, a configuration parameter type, and a value of a radio network configuration attribute from a third-party server, where the first identifier identifies a terminal device or a communication service outside an access network device, and the configuration parameter type indicates a type of the radio network configuration attribute that is about the terminal device or the communication service and that is needed by the third-party server. The management function entity sends the first identifier to a core network device. The management function entity receives a second identifier from the core network device, where the second identifier identifies the terminal device or the communication service inside the access network device. The management function entity sends the second identifier, the configuration parameter type, and the value of the radio network configuration attribute to the access network device.

According to the foregoing solution, the third-party server may request, via the first identifier, to configure the radio network configuration attribute about the terminal device or the communication service. In comparison with a case in which only a coarse granularity-level radio network configuration attribute can be configured in a related technology, a fine granularity-level radio network configuration attribute can be configured, to optimize a service or an application service.

In a possible implementation, the first identifier is determined based on at least one of the following: a slice identifier, a service type, a service identifier, an SUPI, a GPSI, an external group identifier, and an identity address of the terminal device.

According to the foregoing solution, the first identifier may identify the terminal device or the communication service outside the access network device. The core network device may determine the second identifier based on the first identifier, to identify the terminal device or the communication service inside the access network device. In this way, the radio network configuration attribute about the terminal device or the communication service may be configured.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may configure the radio network configuration attribute about the terminal device or the communication service based on the second identifier.

In a possible implementation, the configuration parameter type includes at least one of the following: a throughput, delay information, radio available bandwidth estimation information, delay estimation information, and high-precision timing information.

According to the foregoing solution, the third-party server may configure one or more types of radio network configuration attributes about the terminal device or the communication service, to optimize the service or the application service.

In a possible implementation, the management function entity includes a configuration management function entity and an exposure governance management function entity. The exposure governance management function entity receives the first identifier, the configuration parameter type, and the value of the radio network configuration attribute from the third-party server. The exposure governance management function entity sends the first identifier, the configuration parameter type, and the value of the radio network configuration attribute to the configuration management function entity. The configuration management function entity sends the first identifier, the configuration parameter type, and the value of the radio network configuration attribute to the core network device. The configuration management function entity sends the second identifier, the configuration parameter type, and the value of the radio network configuration attribute to the access network device.

According to the foregoing solution, the exposure governance management function entity may receive the first identifier and the configuration parameter type from the third-party server, and request the configuration management function entity to configure the radio network configuration attribute about the terminal device or the communication service. The configuration management function entity may trigger the core network device to associate the first identifier with the second identifier. In this way, the configuration management function entity may request, based on the second identifier, the access network device to configure the radio network configuration attribute about the terminal device or the communication service.

According to a thirteenth aspect, a data configuration method is provided. The method may be performed by an access network device or a chip having a function similar to that of the access network device. In the method, the access network device receives a second identifier, a configuration parameter type, and a value of a radio network configuration attribute from a management function entity, where the second identifier identifies a terminal device or a communication service inside the access network device, and the configuration parameter type indicates a type of the radio network configuration attribute that is about the terminal device or the communication service and that is needed by a third-party server. The access network device configures the radio network configuration attribute based on the value of the radio network configuration attribute.

According to the foregoing solution, the third-party server may request, via a first identifier, to configure the radio network configuration attribute about the terminal device or the communication service. In comparison with a case in which only a coarse granularity-level radio network configuration attribute can be configured in a related technology, a fine granularity-level radio network configuration attribute can be configured, to optimize a service or an application service.

In a possible implementation, the second identifier is at least one of the following: an RNTI, a GUTI, an internal group identifier, a 5G-S-TMSI, an NGAP UE ID, a QCI, a 5QI, and S-NSSAI.

According to the foregoing solution, the second identifier may identify the terminal device or the communication service inside the access network device. Therefore, the access network device may configure the radio network configuration attribute about the terminal device or the communication service based on the second identifier.

In a possible implementation, the configuration parameter type includes at least one of the following: a throughput, delay information, radio available bandwidth estimation information, delay estimation information, and high-precision timing information.

According to the foregoing solution, the third-party server may configure one or more types of radio network configuration attributes about the terminal device or the communication service, to optimize the service or the application service.

According to a fourteenth aspect, a communication apparatus is provided, and includes a processing unit and a transceiver unit.

The transceiver unit is configured to receive a first identifier and data type information, where the first identifier identifies a terminal device or a communication service outside an access network device, and the data type information indicates a type of radio network performance data that is about the terminal device or the communication service and that is needed by a third-party server. The processing unit is configured to determine a second identifier based on the first identifier. The transceiver unit is further configured to send the second identifier, the data type information, and a return address to the access network device, where the second identifier identifies the terminal device or the communication service inside the access network device; and the return address is an address of a management function entity, and indicates the access network device to send target radio network performance data to the return address.

According to a fifteenth aspect, a communication apparatus is provided, and includes a processing unit and a transceiver unit.

The transceiver unit is configured to receive a second identifier, data type information, and a return address from a core network device, where the second identifier identifies a terminal device or a communication service inside an access network device, and the data type information indicates a type of radio network performance data that is about the terminal device or the communication service and that is needed by a third-party server. The processing unit is configured to query for radio network performance data corresponding to the data type information. The transceiver unit is further configured to send the target radio network performance data to the return address.

According to a sixteenth aspect, a communication apparatus is provided, and includes a processing unit and a transceiver unit.

The transceiver unit is configured to receive a service request message from a third-party server, where the service request message includes a first identifier and data type information, the first identifier identifies a terminal device or a communication service outside an access network device, and the data type information indicates a type of radio network performance data that is about the terminal device or the communication service and that is needed by the third-party server. The processing unit is configured to determine a core network device. The transceiver unit is further configured to send the first identifier and the data type information to the core network device, to enable the core network device to trigger the access network device to provide target radio network performance data for a management function entity. The transceiver unit is further configured to receive the target radio network performance data from the access network device. The transceiver unit is further configured to send the target radio network performance data to the third-party server.

According to a seventeenth aspect, a communication apparatus is provided, and includes a processing unit and a transceiver unit.

The transceiver unit is configured to receive a first identifier from a management function entity, where the first identifier identifies a terminal device or a communication service outside an access network device. The processing unit is configured to determine a second identifier based on the first identifier. The transceiver unit is further configured to send, to the management function entity, the second identifier corresponding to the first identifier, where the second identifier identifies the terminal device or the communication service inside the access network device.

According to an eighteenth aspect, a communication apparatus is provided, and includes a processing unit and a transceiver unit.

The transceiver unit is configured to receive a first identifier and data type information from a third-party server, where the first identifier identifies a terminal device or a communication service outside an access network device, and the data type information indicates a type of radio network performance data that is about the terminal device or the communication service and that is needed by the third-party server. The processing unit is configured to determine a core network device. The transceiver unit is further configured to send the first identifier to the core network device. The transceiver unit is further configured to receive a second identifier from the core network device, where the second identifier identifies the terminal device or the communication service inside the access network device. The transceiver unit is further configured to send the second identifier and the data type information to the access network device. The transceiver unit is further configured to receive radio network performance data from the access network device. The transceiver unit is further configured to send the target radio network performance data to the third-party server.

According to a nineteenth aspect, a communication apparatus is provided, and includes a processing unit and a transceiver unit.

The transceiver unit is configured to receive a second identifier and data type information from a management function entity, where the second identifier identifies a terminal device or a communication service inside an access network device, and the data type information indicates a type of radio network performance data that is about the terminal device or the communication service and that is needed by a third-party server. The processing unit is configured to query for radio network performance data. The transceiver unit is further configured to send the target radio network performance data to the management function entity.

Based on a possible implementation of the fourteenth aspect to the nineteenth aspect, the first identifier is determined based on at least one of the following: a slice identifier, a service type, a service identifier, an SUPI, a GPSI, an external group identifier, and an identity address of the terminal device.

Based on a possible implementation of the fourteenth aspect to the nineteenth aspect, the second identifier is at least one of the following: an RNTI, a GUTI, an internal group identifier, a 5G-S-TMSI, an NGAP UE ID, a QCI, a 5QI, and S-NSSAI.

Based on a possible implementation of the thirteenth aspect to the eighteenth aspect, the data type information includes at least one of the following: a throughput, delay information, radio available bandwidth estimation information, delay estimation information, and high-precision timing information.

According to a twentieth aspect, a communication apparatus is provided, and includes a processing unit and a transceiver unit.

The transceiver unit is configured to receive a first identifier, a configuration parameter type, and a value of a radio network configuration attribute, where the first identifier identifies a terminal device or a communication service outside an access network device, and the configuration parameter type indicates a type of the radio network configuration attribute that is about the terminal device or the communication service and that is needed by a third-party server. The processing unit is configured to determine a second identifier based on the first identifier. The transceiver unit is further configured to send the second identifier, the configuration parameter type, and the value of the radio network configuration attribute to the access network device, where the second identifier identifies the terminal device or the communication service inside the access network device.

According to a twenty-first aspect, a communication apparatus is provided, and includes a processing unit and a transceiver unit.

The transceiver unit is configured to receive a second identifier, a configuration parameter type, and a value of a radio network configuration attribute from a core network device, where the second identifier identifies a terminal device or a communication service inside an access network device, and the configuration parameter type indicates a type of the radio network configuration attribute that is about the terminal device or the communication service and that is needed by a third-party server. The processing unit is configured to configure the radio network configuration attribute based on the value of the radio network configuration attribute.

According to a twenty-second aspect, a communication apparatus is provided, and includes a processing unit and a transceiver unit.

The transceiver unit is configured to receive a service request message from a third-party server, where the service request message includes a first identifier, a configuration parameter type, and a value of a radio network configuration attribute, the first identifier identifies a terminal device or a communication service outside an access network device, and the configuration parameter type indicates a type of the radio network configuration attribute that is about the terminal device or the communication service and that is needed by the third-party server. The processing unit is configured to determine a core network device. The transceiver unit is further configured to send the first identifier and the configuration parameter type to the core network device, to enable the core network device to trigger the access network device to configure the radio network configuration attribute.

According to a twenty-third aspect, a communication apparatus is provided, and includes a processing unit and a transceiver unit.

The transceiver unit is configured to receive a first identifier from a management function entity, where the first identifier identifies a terminal device or a communication service outside an access network device. The processing unit is configured to determine a second identifier based on the first identifier. The transceiver unit is further configured to send, to the management function entity, the second identifier corresponding to the first identifier, where the second identifier identifies the terminal device or the communication service inside the access network device.

According to a twenty-fourth aspect, a communication apparatus is provided, and includes a processing unit and a transceiver unit.

The transceiver unit is configured to receive a first identifier, a configuration parameter type, and a value of a radio network configuration attribute from a third-party server, where the first identifier identifies a terminal device or a communication service outside an access network device, and the configuration parameter type indicates a type of the radio network configuration attribute that is about the terminal device or the communication service and that is needed by the third-party server. The processing unit is configured to determine a core network device. The transceiver unit is further configured to send the first identifier to the core network device. The transceiver unit is further configured to receive a second identifier from the core network device, where the second identifier identifies the terminal device or the communication service inside the access network device. The transceiver unit is further configured to send the second identifier, the configuration parameter type, and the value of the radio network configuration attribute to the access network device.

According to a twenty-fifth aspect, a communication apparatus is provided, and includes a processing unit and a transceiver unit.

The transceiver unit is configured to receive a second identifier, a configuration parameter type, and a value of a radio network configuration attribute from a management function entity, where the second identifier identifies a terminal device or a communication service inside an access network device, and the configuration parameter type indicates a type of the radio network configuration attribute that is about the terminal device or the communication service and that is needed by a third-party server. The processing unit is configured to configure the radio network configuration attribute based on the value of the radio network configuration attribute.

Based on a possible implementation of the twentieth aspect to the twenty-fifth aspect, the first identifier is determined based on at least one of the following: a slice identifier, a service type, a service identifier, an SUPI, a GPSI, an external group identifier, and an identity address of the terminal device.

Based on a possible implementation of the twentieth aspect to the twenty-fifth aspect, the second identifier is at least one of the following: an RNTI, a GUTI, an internal group identifier, a 5G-S-TMSI, an NGAP UE ID, a QCI, a 5QI, and S-NSSAI.

Based on a possible implementation of the twentieth aspect to the twenty-fifth aspect, the configuration parameter type includes at least one of the following: a throughput, delay information, radio available bandwidth estimation information, delay estimation information, and high-precision timing information.

According to a twenty-sixth aspect, this application provides a communication apparatus. The communication apparatus may be the communication apparatus according to any one of the fourteenth aspect and the twenty-fifth aspect or a chip disposed in the communication apparatus according to any one of the fourteenth aspect and the twenty-fifth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the management function entity in any possible implementation of any one of the first aspect to the thirteenth aspect, the communication apparatus is enabled to perform the method performed by the core network device in any possible implementation of any one of the first aspect to the thirteenth aspect, or the communication apparatus is enabled to perform the method performed by the access network device in any possible implementation of any one of the first aspect to the thirteenth aspect.

It should be understood that the communication interface may be implemented by using an antenna, a feeder, a codec, and the like in the communication apparatus. Alternatively, if the communication apparatus is a chip disposed in a communication device at a transmitting end or a communication device at a receiving end, the communication interface may be an input/output interface of the chip, for example, an input/output pin. The communication apparatus may further include a transceiver, used by the communication apparatus to communicate with another device. For example, when the communication apparatus is a core network device, the another device is an access network device or a management function entity; when the communication apparatus is a management function entity, the another device is a core network device or an access network device; or when the communication apparatus is an access network device, the another device is a core network device or a management function entity.

According to a twenty-seventh aspect, this application provides a communication apparatus, including a logic circuit and an input/output interface.

For example, the input/output interface is configured to input a first identifier and data type information from a third-party server, where the first identifier identifies a terminal device or a communication service outside an access network device, and the data type information indicates a type of radio network performance data that is about the terminal device or the communication service and that is needed by the third-party server. The logic circuit is configured to obtain a second identifier based on the first identifier, where the second identifier identifies the terminal device or the communication service inside the access network device. The logic circuit is further configured to obtain target radio network performance data about the terminal device or the communication service based on the second identifier, where the target radio network performance data matches the data type information. The input/output interface is further configured to output the target radio network performance data to the third-party server.

For example, the input/output interface is configured to input a first identifier and data type information, where the first identifier identifies a terminal device or a communication service outside an access network device, and the data type information indicates a type of radio network performance data that is about the terminal device or the communication service and that is needed by a third-party server. The logic circuit is configured to determine a second identifier based on the first identifier. The input/output interface is further configured to output the second identifier, the data type information, and a return address to the access network device, where the second identifier identifies the terminal device or the communication service inside the access network device; and the return address is an address of a management function entity, and indicates the access network device to output radio network performance data to the return address.

For example, the input/output interface is configured to input a second identifier, data type information, and a return address from a core network device, where the second identifier identifies a terminal device or a communication service inside an access network device, and the data type information indicates a type of radio network performance data that is about the terminal device or the communication service and that is needed by a third-party server. The logic circuit is configured to query for radio network performance data corresponding to the data type information. The input/output interface is further configured to output the radio network performance data to the return address.

For example, the input/output interface is configured to input a service request message from a third-party server, where the service request message includes a first identifier and data type information, the first identifier identifies a terminal device or a communication service outside an access network device, and the data type information indicates a type of radio network performance data that is about the terminal device or the communication service and that is needed by the third-party server. The logic circuit is configured to determine a core network device. The input/output interface is further configured to output the first identifier and the data type information to the core network device, to enable the core network device to trigger the access network device to provide radio network performance data for a management function entity. The input/output interface is further configured to input the radio network performance data from the access network device. The input/output interface is further configured to output the radio network performance data to the third-party server.

For example, the input/output interface is configured to input a first identifier from a management function entity, where the first identifier identifies a terminal device or a communication service outside an access network device. The logic circuit is configured to determine a second identifier based on the first identifier. The input/output interface is further configured to output, to the management function entity, the second identifier corresponding to the first identifier, where the second identifier identifies the terminal device or the communication service inside the access network device.

For example, the input/output interface is configured to input a first identifier and data type information from a third-party server, where the first identifier identifies a terminal device or a communication service outside an access network device, and the data type information indicates a type of radio network performance data that is about the terminal device or the communication service and that is needed by the third-party server. The logic circuit is configured to determine a core network device. The input/output interface is further configured to output the first identifier to the core network device. The input/output interface is further configured to input a second identifier from the core network device, where the second identifier identifies the terminal device or the communication service inside the access network device. The input/output interface is further configured to output the second identifier and the data type information to the access network device. The input/output interface is further configured to input radio network performance data from the access network device. The input/output interface is further configured to output the radio network performance data to the third-party server.

For example, the input/output interface is configured to input a second identifier and data type information from a management function entity, where the second identifier identifies a terminal device or a communication service inside an access network device, and the data type information indicates a type of radio network performance data that is about the terminal device or the communication service and that is needed by a third-party server. The logic circuit is configured to query for radio network performance data. The input/output interface is further configured to output the radio network performance data to the management function entity.

For example, the input/output interface is configured to input a first identifier, a configuration parameter type, and a value of a radio network configuration attribute, where the first identifier identifies a terminal device or a communication service outside an access network device, and the configuration parameter type indicates a type of the radio network configuration attribute that is about the terminal device or the communication service and that is needed by a third-party server. The logic circuit is configured to determine a second identifier based on the first identifier. The input/output interface is further configured to output the second identifier, the configuration parameter type, and the value of the radio network configuration attribute to the access network device, where the second identifier identifies the terminal device or the communication service inside the access network device.

For example, the input/output interface is configured to input a second identifier, a configuration parameter type, and a value of a radio network configuration attribute from a core network device, where the second identifier identifies a terminal device or a communication service inside an access network device, and the configuration parameter type indicates a type of the radio network configuration attribute that is about the terminal device or the communication service and that is needed by a third-party server. The logic circuit is configured to configure the radio network configuration attribute based on the value of the radio network configuration attribute.

For example, the input/output interface is configured to input a service request message from a third-party server, where the service request message includes a first identifier, a configuration parameter type, and a value of a radio network configuration attribute, the first identifier identifies a terminal device or a communication service outside an access network device, and the configuration parameter type indicates a type of the radio network configuration attribute that is about the terminal device or the communication service and that is needed by the third-party server. The logic circuit is configured to determine a core network device. The input/output interface is further configured to output the first identifier and the configuration parameter type to the core network device, to enable the core network device to trigger the access network device to configure the radio network configuration attribute.

For example, the input/output interface is configured to input a first identifier from a management function entity, where the first identifier identifies a terminal device or a communication service outside an access network device. The logic circuit is configured to determine a second identifier based on the first identifier. The input/output interface is further configured to output, to the management function entity, the second identifier corresponding to the first identifier, where the second identifier identifies the terminal device or the communication service inside the access network device.

For example, the input/output interface is configured to input a first identifier, a configuration parameter type, and a value of a radio network configuration attribute from a third-party server, where the first identifier identifies a terminal device or a communication service outside an access network device, and the configuration parameter type indicates a type of the radio network configuration attribute that is about the terminal device or the communication service and that is needed by the third-party server. The logic circuit is configured to determine a core network device. The input/output interface is further configured to output the first identifier to the core network device. The input/output interface is further configured to input a second identifier from the core network device, where the second identifier identifies the terminal device or the communication service inside the access network device. The input/output interface is further configured to output the second identifier, the configuration parameter type, and the value of the radio network configuration attribute to the access network device.

For example, the input/output interface is configured to input a second identifier, a configuration parameter type, and a value of a radio network configuration attribute from a management function entity, where the second identifier identifies a terminal device or a communication service inside an access network device, and the configuration parameter type indicates a type of the radio network configuration attribute that is about the terminal device or the communication service and that is needed by a third-party server. The logic circuit is configured to configure the radio network configuration attribute based on the value of the radio network configuration attribute.

According to a twenty-eighth aspect, this application provides a chip system. The chip system includes a processor, may further include a memory, and is configured to implement a possible implementation of any one of the first aspect to the thirteenth aspect. In a possible implementation, the chip system further includes the memory, configured to store program instructions and/or data. The chip system may include a chip, or may include the chip and another discrete component.

According to a twenty-ninth aspect, this application provides a communication system. The communication system includes the communication apparatus according to the thirteenth aspect, the communication apparatus according to the fourteenth aspect, and the communication apparatus according to the fifteenth aspect. Alternatively, the communication system includes the communication apparatus according to the sixteenth aspect, the communication apparatus according to the seventeenth aspect, and the communication apparatus according to the eighteenth aspect. Alternatively, the communication system includes the communication apparatus according to the nineteenth aspect, the communication apparatus according to the twentieth aspect, and the communication apparatus according to the twenty-first aspect. Alternatively, the communication system includes the communication apparatuses according to the twenty-second aspect and the twenty-third aspect, and the communication apparatus according to the twenty-fourth aspect.

According to a thirtieth aspect, this application provides a computer-readable storage medium. The computer-readable storage medium stores a computer program or instructions. When the computer program or the instructions are run, the methods performed by the core network device, the access network device, and the management function entity in the foregoing aspects are implemented.

According to a thirty-first aspect, a computer program product is provided. The computer program product includes computer program code or instructions. When the computer program code or the instructions are run, the methods performed by the core network device in the foregoing aspects are enabled to be performed, the methods performed by the access network device in the foregoing aspects are enabled to be performed, or the methods performed by the management function entity in the foregoing aspects are enabled to be performed.

For beneficial effects of the fourteenth aspect to the thirty-first aspect and the implementations thereof, refer to the descriptions of the beneficial effects of the methods in the first aspect to the thirteenth aspect and the implementations thereof.

### BRIEF DESCRIPTION OF DRAWINGS

FIG. 1 is a diagram of a network management architecture according to an embodiment of this application;
FIG. 2 is a diagram of a management capability exposure scenario according to an embodiment of this application;
FIG. 3 is an example flowchart of a data query method according to an embodiment of this application;
FIG. 4 is an example flowchart of a data query method according to an embodiment of this application;
FIG. 5 is an example flowchart of a data query method according to an embodiment of this application;
FIG. 6 is an example flowchart of a data query method according to an embodiment of this application;
FIG. 7 is an example flowchart of a data query method according to an embodiment of this application;
FIG. 8 is an example flowchart of a data query method according to an embodiment of this application;
FIG. 9 is an example flowchart of a data configuration method according to an embodiment of this application;
FIG. 10 is an example flowchart of a data configuration method according to an embodiment of this application;
FIG. 11 is an example flowchart of a data configuration method according to an embodiment of this application;
FIG. 12 is an example flowchart of a data configuration method according to an embodiment of this application;
FIG. 13 is an example flowchart of a data configuration method according to an embodiment of this application;
FIG. 14 is an example flowchart of a data configuration method according to an embodiment of this application;
FIG. 15 is a diagram of a communication apparatus according to an embodiment of this application;
FIG. 16 is a diagram of a communication apparatus according to an embodiment of this application;
FIG. 17 is a diagram of a communication apparatus according to an embodiment of this application; and
FIG. 18 is a diagram of a communication apparatus according to an embodiment of this application.

### DESCRIPTION OF EMBODIMENTS

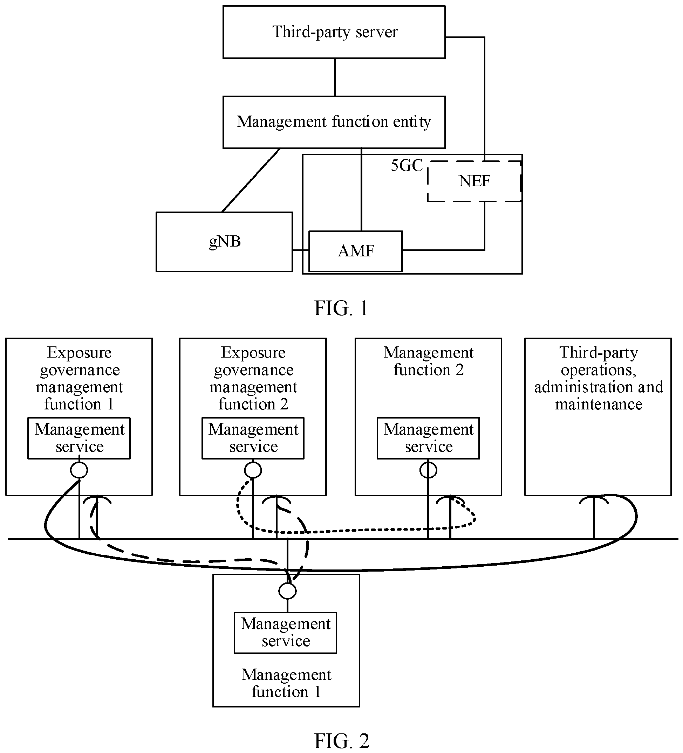

For ease of understanding of the technical solutions provided in embodiments of this application, the following explains and describes terms in embodiments of this application.
(1) A management function (management function, MnF) entity is a logical functional unit that implements a specific management job or function (for example, performing parameter configuration on a network or collecting network performance data). In a 5G network management technology, a service-based SBMA architecture (service-based management architecture, service-based management architecture) is proposed. A basic component of the SBMA is a management function. Refer to FIG. 1. The MnF may serve as a management service producer (MnS producer) to provide another MnF with a management service (management service, MnS) provided by the MnF. Similarly, the MnF may alternatively serve as a management service consumer (MnS consumer) to invoke an MnS provided by another MnF. MnFs invoke MnSs of each other through a service-based interface.

For ease of understanding of the technical solutions provided in embodiments of this application, the following explains and describes, by using the accompanying drawings, the technical solutions provided in embodiments of this application.

FIG. 1 is a diagram of a network management architecture. The following briefly describes functions of some network elements. In the network management architecture shown in FIG. 1, an exposure governance management function (exposure governance management function, EGMF) may expose, to a third-party server, network operation and maintenance management information provided by a network device, and a 5th generation mobile communication technology core network (5th generation mobile communication technology core network, 5GC) may expose related information, for example, location information or a configuration parameter, of the core network, to the third-party server.

The MnF refers to a plurality of different management functions responsible for specific management jobs or functions. For example, the EGMF in FIG. 1 is an MnF that implements a management capability exposure governance function. Optionally, another specific MnF that implements a specific function may be further defined, for example, a management data analytics function (management data analytics function, MDAF) or a data coordination and control function (data coordination and collection function, DCCF). This is not specifically limited in this application.

Both the third-party server (for example, a vertical industry (vertical industry), which is essentially an organization or company that uses/consumes a carrier-customized network service (for example, a network slice)) and an MnF 2 may be understood as an authorized customer that is not directly trusted by a management domain in which an MnF 1 is located.

The management functions in FIG. 1 may communicate with each other based on a service-based interface protocol like a hypertext transfer protocol (hypertext transfer protocol, HTTP), or may communicate with each other based on a management communication interface protocol like a simple object access protocol (simple object access protocol, SOAP).

In the 5G network management technology, the 3rd generation partnership project (3rd generation partnership project, 3GPP) standard proposes the service-based management architecture (service-based management architecture, SBMA). The management function MnF is a basic component unit of the SBMA. The MnF is a logical entity that provides the specific management job or function, and a management capability provided by the MnF to the outside is referred to as the management service (management service, MnS). The MnF may serve as the management service producer (MnS producer) to provide, for use, the another MnF with the MnS provided by the MnF. Similarly, the MnF may alternatively serve as the management service consumer (MnS consumer) to invoke the MnS provided by the another MnF. The MnFs invoke the MnSs of each other through the service-based interface.

Currently, a specific exposure mechanism of the EGMF has not been defined in the 3GPP standard. However, for a general exposure flowchart, refer to FIG. 2. The MnF 1 is a logical management function that provides a specific management function service in the first carrier management system. The MnF 2 is to a logical management function in a second carrier management system.

FIG. 2 shows two management capability exposure scenarios.

Scenario 1: The management function 2 (MnF 2) obtains, through capability exposure of the exposure governance management function (EGMF), a management service (MnS) provided by the management function 1 (MnF 1).

The management function 2 (MnF 2) may obtain, through capability exposure of an exposure governance management function 2 (EGMF 2), the management service (MnS) provided by the management function 1 (MnF 1).

Scenario 2: The third-party server obtains, through capability exposure of the exposure governance management function (EGMF), a management service (MnS) provided by the management function 1 (MnF 1).

The third-party server may obtain, through capability exposure of an exposure governance management function 1 (EGMF 1), the management service (MnS) provided by the management function 1 (MnF 1).

In a scenario in which an information exposure service is provided for the vertical industry, currently supported radio network information exposure is coarse granularity information. Consequently, the vertical industry cannot use fine granularity-level radio network information to optimize a service or an application service. For example, in a scenario of machine-vision-based quality inspection on an industrial production line, to adjust bandwidth of a terminal device (for example, a camera), adjustment may be performed on cameras in a same cell together. However, this may result in an increase in bandwidth of a camera whose shot does not include a product processing action, and result in unnecessary bandwidth consumption; or result in a decrease in bandwidth of a camera whose shot includes a product processing action that is being performed, result in reduction of video quality, and affect production efficiency of the production line. Consequently, a service requirement of the vertical industry cannot be satisfied.

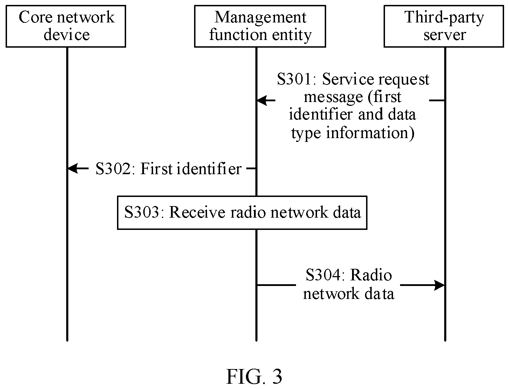

**In** view of this, embodiments of this application provide a data query method. **In** the method, exposure of fine granularity-level radio network information is supported, so that the fine granularity-level radio network information may be used to optimize a service or an application service. FIG. 3 is an example flowchart of a data query method according to an embodiment of this application. The following operations may be included.

S301: A management function entity receives a service request message from a third-party server.

Accordingly, the third-party server sends the service request message to the management function entity.

In a possible implementation, the service request message may include a first identifier and data type information. The first identifier may identify a terminal device or a communication service within ranges of the third-party server, the management function entity, and a core network device. In other words, the first identifier may be an identifier that may be identified by the third-party server, the management function entity, and the core network device, and the unique terminal device or communication service may be determined based on the first identifier.

It may be understood that the third-party server may be a server that provides a service for the terminal device, or it may be understood as that the terminal device is a device that enjoys the service provided by the third-party server. For example, if a server A may provide an instant messaging service, the terminal device may be a device that uses the instant messaging service. The communication service may be the service provided by the third-party server. For example, the third-party server may provide a live service and an instant messaging service. The communication service may be a type of service provided by the third-party server, for example, the live service.

In a possible case, the first identifier may be determined based on at least one of service information and information about the terminal device. The service information may include one or more of slice information (for example, a slice identifier), a service type (for example, live), a service identifier, and the like. The information about the terminal device may include an identifier of the terminal device, for example, a subscription permanent identifier (subscription permanent identifier, SUPI), a generic public subscription identifier (generic public subscription identifier, GPSI), an external group identifier (external group identifier), or an ID address (address).

For example, when the first identifier identifies the terminal device, the first identifier may include the SUPI. For another example, when the first identifier identifies the communication service, the first identifier may include the slice identifier or the service identifier.

In an example, the data type information may indicate a type of radio network data that is about the terminal device or the communication service and that is needed by the third-party server, for example, a type of radio network performance data. In other words, the third-party server may request to query for terminal-level data or communication service-level data. Optionally, the data type information may include the radio network data such as a throughput, delay information, radio available bandwidth estimation information, delay estimation information, or terminal-level high-precision timing information.

Optionally, the service request message may further include UE assistance information. For example, when the first identifier identifies the terminal device, in other words, when the first identifier is determined based on the information about the terminal device, the service request message may further include the UE assistance information. It may be understood that the UE assistance information may be used by the management function entity to determine the core network device, for example, an AMF, with which the terminal device currently performs communication registration. For example, the corresponding core network device is determined based on UE location (location) information.

It may be understood that, when the service request message does not include UE assistance information, in other words, when the first identifier is determined based on the service information or when the first identifier identifies the communication service, the management function entity may determine a core network device like an AMF based on the first identifier.

It should be noted that, for a terminal device with a large moving range (for example, across cells, where communication services are provided by different AMFs), the UE location information may be collected with consent of a user when the user uses an application (application, APP). For a terminal device with a small moving range (for example, remote control is performed at a harbour, or machine-vision-based quality inspection is implemented on an industrial production line), the UE location information may be collected when the terminal device is installed and arranged.

In a possible implementation, the service request message may be a hypertext transfer protocol (hypertext transfer protocol, HTTP) message. The service request message is an information query message. Therefore, an HTTP get (get) message may be used as the service request message. The first identifier may be placed in a path (path) of the HTTP get message. The data type information and the UE assistance information may be placed in an HTTP get message request body (request body) to be used as message resources. It may be understood that the HTTP message is merely used as an example for description of the service request message, and does not constitute a limitation on the service request message. A form of the service request message is not specifically limited in this embodiment of this application.

S302: The management function entity sends the first identifier to the core network device.

Accordingly, the core network device receives the first identifier from the management function entity.

For example, the management function entity sends a first radio network performance data request message to the core network device, where the first radio network performance data request message may carry the first identifier.

In a possible implementation, the core network device may associate the first identifier with a second identifier, where the second identifier may be allocated by the core network device, and the second identifier identifies the terminal device or the communication service inside an access network device.

In an example, when the second identifier identifies the terminal device, the second identifier may include one or more of a radio network temporary identity (radio network temporary identity, RNTI), a globally unique temporary UE identity (globally unique temporary UE identity, GUTI), an internal group identifier (internal group identifier), a 5G-system architecture evolution temporary UE identifier (5G-system architecture evolution temporary mobile station identifier, 5G-S-TMSI), and an application layer protocol UE identity (protocol for NG interface UE identity, NGAP UE ID).

In another example, when the second identifier identifies the communication service, the second identifier may include one or more of a quality of service class identifier (quality of service class identifier, QCI), a quality of service (quality of service, QoS) parameter scalar (5QI), a QoS flow identifier (QoS flow identifier, QFI), a deep neural network (deep neural network, DNN), and single network slice selection assistance information (single network slice selection assistance information, S-NSSAI).

The core network device may store a correspondence between the first identifier and the second identifier, and determine the second identifier based on the first identifier from the management function entity in S302 and the correspondence between the first identifier and the second identifier. The second identifier may be for querying for the radio network data needed by the third-party server.

In a possible implementation, the core network device may send the second identifier to the management function entity. Accordingly, the management function entity may receive the second identifier from the core network device. The second identifier corresponds to the first identifier in S302. In this way, the management function entity may query, based on the second identifier, the access network device for the data corresponding to the data type information. For example, the management function entity may send the second identifier and the data type information to the access network device. Accordingly, the access network device may receive the second identifier and the data type information from the management function entity. The access network device may query, based on the second identifier, for radio network data that is about the terminal device or communication service and that corresponds to the data type information. The access network device may send, to the management function entity, the radio network data that is about the terminal device or the communication service and that is obtained through the query.

Optionally, the management function entity may further send the data type information to the core network device. For example, the first radio network performance data request message may further carry the data type information. The core network device requests the access network device to query for radio network data that is about the terminal device or the communication service and that corresponds to the first identifier. The core network device may determine the second identifier based on the first identifier. For implementation, refer to the foregoing implementation. Details are not described herein again. In this example, the core network device may send the second identifier, the data type information, and a return address to the access network device. The second identifier corresponds to the first identifier in S302. The return address may be an address of the management function entity, and indicates the access network device to send target radio network data to the return address. In this way, the access network device may query, based on the second identifier, for radio network data that is about the terminal device or communication service and that corresponds to the data type information. The access network device may send, to the management function entity, the radio network data that is about the terminal device or the communication service and that is obtained through the query. For example, the access network device may send, to the return address, the radio network data that is about the terminal device or the communication service and that is obtained through the query.

S303: The management function entity receives target radio network data.

For example, the management function entity may receive the target radio network data such as target radio network performance data from the access network device. It may be understood that the target radio network data matches the data type information, in other words, the target radio network data corresponds to the data type information or the target radio network data belongs to the data type information.

S304: The management function entity sends the target radio network data to the third-party server.

Accordingly, the third-party server receives the target radio network data from the management function entity.

For example, the management function entity may send a service response message to the third-party server. The service response message may include the radio network data that is about the terminal device or the communication service and that is obtained through the query.

Optionally, after receiving the radio network data about the terminal device or the communication service, the third-party server may be configured to dynamically adjust a service configuration parameter to optimize a service.

For example, in a scenario in which the remote control is performed at the harbour, after receiving radio network data, for example, a throughput and delay information, about a video communication service, a harbour management system may use the radio network data for modeling analysis, to instruct the access network device to configure a service scheduling model parameter of the video in a targeted manner.

For another example, in a scenario in which a live application service is provided in an Internet industry, after receiving radio network data, for example, radio link performance estimation information, about a live communication service, an Internet service management system may adjust a service parameter based on the radio network data. For example, an image frame compression rate is adjusted to improve user-perceived smoothness.

For another example, in a scenario of the machine-vision-based quality inspection on the industrial production line, by obtaining the radio network data, for example, the throughput and the delay information, about the terminal device, a management system may accordingly adjust a scheduling priority and corresponding bandwidth of a camera, to ensure video quality of a camera whose shot includes a product processing action that is being performed. For example, the management system decreases a priority of a camera with a low throughput and a high delay, namely, a camera whose video quality significantly declines. Although the video quality of the camera whose priority is decreased significantly declines or even freezing occurs, actual production quality is not affected because there is no product processing action in this time interval.

According to the foregoing solution, the third-party server may request, via the first identifier, to query for the radio network data about the terminal device or the communication service. In comparison with a case in which only coarse granularity-level radio network data can be queried for in a related technology, fine granularity-level radio network data can be obtained through query, to optimize a service or an application service.

In a possible implementation, the management function entity may send the first identifier to the AMF or a NEF in S302. The following separately uses a case 1 and a case 2 for description.

Case 1: The management function entity sends the first identifier to the AMF.

In a possible implementation, when sending the first identifier to the AMF, the management function entity may send the first identifier to the AMF. For example, the management function entity sends the first radio network performance data request message to the AMF, where the first radio network performance data request message may carry the first identifier. Optionally, the first radio network performance data request message may further carry the data type information. It may be understood that, because the AMF is the core network device, and the AMF receives the radio network performance data request message, the AMF may determine that the access network device provides the radio network performance data. Therefore, the AMF may send a second radio network performance data request message to the access network device. The second radio network performance data request message may include the second identifier and the data type information.

In a possible case, the management function entity may include a performance management function entity (for example, an MnS provider) and an exposure governance management function entity (for example, an exposure governance management function entity). The exposure governance management function entity may receive the service request message from the third-party server. The exposure governance management function entity may request an information measurement job from the performance management function entity. It may be understood that requesting the information measurement job may indicate that a type of a service requested by the exposure governance management function entity from the performance management function entity is a performance measurement job. That is, the exposure governance management function entity requests to measure the radio network data that is about the terminal device or the communication service, that corresponds to the data type information, and that is indicated by the first identifier.

The performance management function entity may be determined based on the data type information. For example, if the data type information indicates the type of the radio network data that is about the terminal device or the communication service and that is needed by the third-party server, for example, the type of the radio network performance data, in other words, the type of the service requested by the exposure governance management function entity is the performance measurement job or the exposure governance management function entity requests the information measurement job from the performance management function entity, the performance management function entity may be a performance management function entity performance assurance service provider (MnS performance assurance service producer).

In an example, when requesting the information measurement job from the performance management function entity, the exposure governance management function entity may send the data type information to an MnS. The data type information may be defined in an information object class (information object class, IOC), and is for measuring the radio network data. A plurality of MDT measurement metrics (measurement names) are defined in the IOC. Currently defined MDT measurement metrics mainly include M4 such as uplink volumes (uplink volumes, UL volumes), M5 such as an uplink throughput volume (uplink throughput volume, UL Thp volume), M6 such as a packet delay (packet delay per QoS level), and M7 such as a packet loss rate (packet loss rate per QoS level). If the data type information of the radio network data needed by the third-party server is not included in definitions of M4, M5, M6, and M7, an MDT measurement metric needs to be newly added. That is, the IOC may be enhanced.

For example, MDT measurement metrics such as radio available bandwidth estimation, delay estimation, and high-precision timing information may be newly added. It may be understood that the newly added MDT measurement metric may be at a terminal-device level and/or a communication-service level. For example, metrics such as terminal device-level and/or communication service-level radio available bandwidth estimation, terminal device-level and/or communication service-level delay estimation, and the terminal device-level high-precision timing information may be newly added.

It may be understood that the foregoing newly added metrics are merely used as examples for description of enhanced MDT measurement metrics, and another MDT measurement metric may be further newly added based on a service requirement. This is not specifically limited in this application.

It should be noted that, in the foregoing case, the performance measurement job (perfmetricjob) may be further enhanced. That is, the performance measurement job is newly added. The performance measurement job is an IOC defined in the 3GPP standard, indicates a performance metric measurement job, and includes a supported MDT measurement type (measurement type). Currently, the supported MDT measurement type does not include terminal device-level or communication service-level radio network data. Therefore, the supported MDT measurement type may be enhanced.

For example, types such as a terminal device-level and/or communication service-level throughput, a terminal device-level and/or communication service-level delay, the terminal device-level and/or communication service-level radio available bandwidth estimation, the terminal device-level and/or communication service-level delay estimation, the terminal device-level high-precision timing information may be newly added.

It may be understood that the foregoing newly added types are merely used as examples for description of enhanced MDT measurement types, and another MDT measurement type may be further newly added based on the service requirement. This is not specifically limited in this application.

The MDT measurement type and the MDT measurement metric are newly added, so that radio network data indicated by the MDT measurement type and the MDT measurement metric of the terminal device or the communication service may be queried for. The exposure governance management function entity may indicate needed data type information to the performance management function entity by using the MDT measurement metric and the MDT measurement type.

In another possible case, in this embodiment of this application, an NR cell (cell) distributed unit (distributed unit, DU)/NR cell central unit (central unit, CU) may be enhanced. The NR cell DU/NR cell CU is an IOC that belongs to a radio network resource model and that is defined in the 3GPP standard, and is for representing a cell distributed unit or central unit management class, that is, indicates a parameter measurement target. There is no directly defined terminal device-level or communication service-level IOC currently. That is, a current parameter measurement target does not include the terminal device or the communication service. However, an IOC object needs to be specified when an MDT measurement metric is indicated. Therefore, in the NR cell DU/NR cell CU, a parameter is newly added to indicate the terminal device or the communication service, to specify a measurement job of a specific terminal device or communication service in the NR cell DU/NR cell CU.

It should be noted that, in this case, a measurement metric type may be further enhanced. For implementation of a manner of enhancing the measurement metric type, refer to the foregoing implementation in which the MDT measurement type is enhanced. Details are not described herein again. The parameter measurement target and the measurement metric type are enhanced, so that a measurement metric type of a terminal device or a communication service in the NR cell DU/NR cell CU may be queried for. An exposure governance management function entity may indicate needed data type information to a performance management function entity by using the measurement metric type.

In a possible implementation, the performance management function entity may send the first identifier to the AMF. The performance management function entity may determine the AMF based on the first identifier or the UE assistance information. For example, when the first identifier identifies the terminal device, the service request message may further include the UE assistance information. Therefore, the performance management function entity may determine, based on the UE assistance information, an AMF that serves the terminal device. For another example, when the first identifier identifies the communication service, the performance management function entity may determine, based on the first identifier, an AMF that is serving the communication service.

Accordingly, the AMF may receive the first identifier from the performance management function entity. The AMF may determine the second identifier based on the first identifier. For implementation, refer to the manner in which the core network device associates the first identifier with the second identifier in S302. Details are not described herein again.

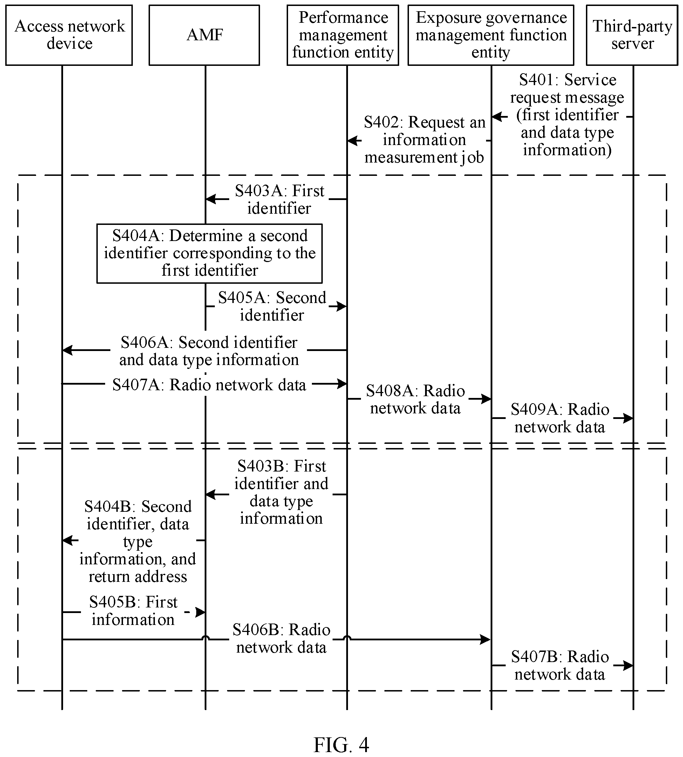

The following describes the foregoing possible cases by using FIG. 4. In an embodiment shown in FIG. 4, a management function entity includes an exposure governance management function entity and a performance management function entity, and a core network device includes an AMF. FIG. 4 is an example flowchart of a data query method according to an embodiment of this application. The following operations may be included.

S401: A third-party server sends a service request message to the exposure governance management function entity.

Accordingly, the exposure governance management function entity receives the service request message from the third-party server.

The service request message may include a first identifier and data type information. Optionally, the service request message may further include UE assistance information. S401 is a possible implementation of S301. For implementation, refer to S301. Details are not described herein again.

S402: The exposure governance management function entity requests an information measurement job from the performance management function entity.

The exposure governance management function entity may indicate the first identifier and the data type information to the performance management function entity by requesting the information measurement job from the performance management function entity. Optionally, the exposure governance management function entity may further indicate the UE assistance information to the performance management function entity. For implementation of S402, refer to the foregoing manner of enhancing the IOC. Details are not described herein again.

In an example, the performance management function entity may send the first identifier to the AMF, to request the AMF to associate the first identifier with a second identifier. The performance management function entity may determine the corresponding AMF based on the UE assistance information or the first identifier. For implementation, refer to the foregoing implementation in which the management function entity determines the core network device. Details are not described herein again. In this example, after S402 is performed, S403A to S409A may be performed.

In another example, the performance management function entity may send the first identifier and the data type information to the AMF, and the AMF requests an access network device to query for radio network data that is about a terminal device or a communication service and that corresponds to the first identifier. The performance management function entity may determine the corresponding AMF based on the UE assistance information or the first identifier. For implementation, refer to the foregoing implementation in which the management function entity determines the core network device. Details are not described herein again. In this example, after S402 is performed, S403B to S407B may be performed.

S403A: The performance management function entity sends the first identifier to the AMF.

Accordingly, the AMF receives the first identifier from the performance management function entity.

The performance management function entity may send the first identifier to the AMF, to request the AMF to associate the first identifier with the second identifier.

S404A: The AMF determines the second identifier corresponding to the first identifier.

For example, the AMF may determine, based on a prestored correspondence between the first identifier and the second identifier, the second identifier corresponding to the first identifier. For implementation, refer to the implementation in which the core network device determines the second identifier in the embodiment shown in FIG. 3. Details are not described herein again.

S405A: The AMF sends the second identifier to the performance management function entity.

Accordingly, the performance management function entity may receive the second identifier from the AMF.

Because the second identifier may identify a terminal device or a communication service within a range of an access network device, the AMF may return the second identifier to the performance management function entity in S405A. In this way, the performance management function entity may query for radio network data about the terminal device or the communication service based on the second identifier.

S406A: The performance management function entity sends the second identifier and the data type information to the access network device.

Accordingly, the access network device may receive the second identifier and the data type information from the performance management function entity.

Because the second identifier identifies the terminal device or the communication service within the range of the access network device, the access network device may determine the terminal device or the communication service based on the second identifier. The access network device may query for the radio network data about the terminal device or the communication service based on the data type information.

S407A: The access network device sends target radio network data to the performance management function entity.

Accordingly, the performance management function entity receives the radio network data from the access network device.

The access network device may send, to the performance management function entity, the radio network data that is about the terminal device or the communication service and that is obtained through the query.

S408A: The performance management function entity sends the target radio network data to the exposure governance management function entity.

Accordingly, the exposure governance management function entity receives the radio network data from the performance management function entity.

The performance management function entity may send, to the corresponding exposure governance management function entity, for example, the exposure governance management function entity in S402, the radio network data received from the access network device.

S409A: The exposure governance management function entity sends the target radio network data to the third-party server.

Accordingly, the third-party server receives the radio network data from the exposure governance management function entity.

For example, the exposure governance management function entity may send a service response message of the service request message in S401 to the third-party server, where the service response message may carry the radio network data.

Based on S403A to S409A above, the performance management function entity may request, based on the second identifier obtained from the AMF, the access network device to query for the radio network data, and send the obtained radio network data to the third-party server via the exposure governance management function entity. The following describes a technical solution in which the AMF requests the access network device to query for the radio network data in S403B to S407B.

S403B: The performance management function entity sends the first identifier and the data type information to the AMF.

Accordingly, the AMF receives the first identifier and the data type information from the performance management function entity.

The performance management function entity may request, via the first identifier and the data type information, the AMF to query the access network device for the radio network data that is about the terminal device or the communication service and that corresponds to the first identifier. The AMF may determine a second identifier based on the first identifier. For implementation, refer to the foregoing implementation in which the core network device determines the second identifier. Details are not described herein again.

S404B: The AMF sends the second identifier, the data type information, and a return address to the access network device.

Accordingly, the access network device may receive the second identifier, the data type information, and the return address from the AMF.

The return address may be an address of the exposure governance management function entity, for example, the address of the exposure governance management function entity in S402, and is used by the access network device to send the radio network data obtained through the query.

Optionally, the embodiment shown in FIG. 4 may further include the following operation S405B.

S405B: The access network device sends first information to the AMF.

Accordingly, the AMF receives the first information from the access network device.

The first information may indicate that the access network device receives the second identifier, the data type information, and the return address. For example, the first information may be status information, indicating that the access network device has received the foregoing information.

Because the second identifier identifies the terminal device or the communication service within a range of the access network device, the access network device may determine the terminal device or the communication service based on the second identifier. The access network device may query for the radio network data about the terminal device or the communication service based on the data type information.

S406B: The access network device sends target radio network data to the return address.

For example, the access network device may send, to the exposure governance management function entity via the return address, the radio network data obtained through the query. In this way, the exposure governance management function entity may receive the radio network data from the access network device.

S407B: The exposure governance management function entity sends the target radio network data to the third-party server.

Accordingly, the third-party server receives the radio network data from the exposure governance management function entity.

For example, the exposure governance management function entity may send a service response message of the service request message in S401 to the third-party server, where the service response message may carry the radio network data.

Based on the embodiment shown in FIG. 4, the third-party server may query for the radio network data about the terminal device or the communication service by using the first identifier, to optimize a service or an application service based on the radio network data. In addition, because the core network device like the AMF cannot obtain the radio network data, but the access network device sends, to the management function entity, the radio network data obtained through the query, data security of the terminal device or the communication service can be improved.

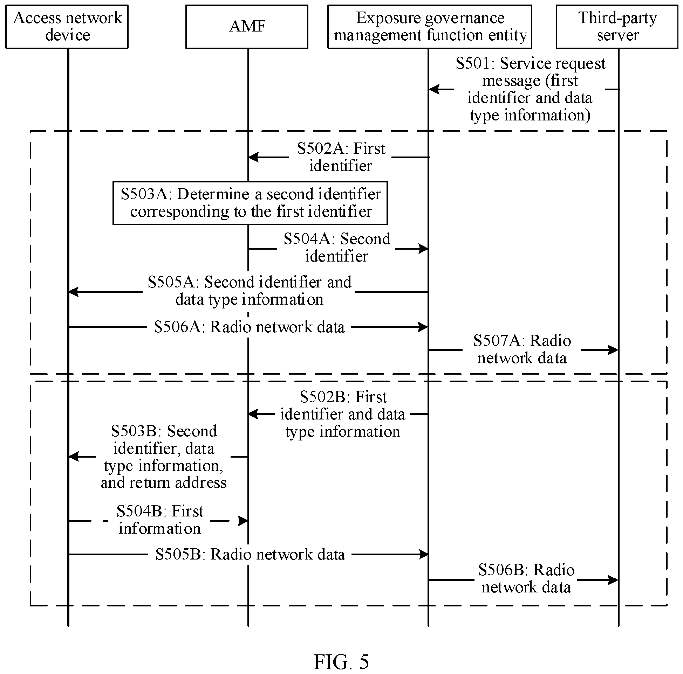

In the embodiment shown in FIG. 4, the management function entity may include the performance management function entity and the exposure governance management function entity. In another possible case, a management function entity may include an exposure governance management function entity. The exposure governance management function entity sends a first identifier and data type information to a core network device like an AMF. The following provides descriptions by using FIG. 5.

FIG. 5 is an example flowchart of a data query method according to an embodiment of this application. The following operations may be included.

S501: A third-party server sends a service request message to an exposure governance management function entity.

Accordingly, the exposure governance management function entity receives the service request message from the third-party server.

The service request message may include a first identifier and data type information. Optionally, the service request message may further include UE assistance information. S501 is a possible implementation of S301. For implementation, refer to S301. Details are not described herein again.

In an example, the exposure governance management function entity may send the first identifier to an AMF, to request the AMF to associate the first identifier with a second identifier. The exposure governance management function entity may determine the corresponding AMF based on the UE assistance information or the first identifier. For implementation, refer to the foregoing implementation in which the management function entity determines the core network device. Details are not described herein again. In this example, after S501 is performed, S502A to S507A may be performed.

In another example, the exposure governance management function entity may send the first identifier and the data type information to an AMF, and the AMF requests an access network device to query for radio network data that is about a terminal device or a communication service and that corresponds to the first identifier. The exposure governance management function entity may determine the corresponding AMF based on the UE assistance information or the first identifier. For implementation, refer to the foregoing implementation in which the management function entity determines the core network device. Details are not described herein again. In this example, after S501 is performed, S502B to S506B may be performed.

S502A: The exposure governance management function entity sends the first identifier to the AMF.

Accordingly, the AMF receives the first identifier from the exposure governance management function entity.

The exposure governance management function entity may send the first identifier to the AMF, to request the AMF to associate the first identifier with the second identifier.

S503A: The AMF determines the second identifier corresponding to the first identifier.

For example, the AMF may determine, based on a prestored correspondence between the first identifier and the second identifier, the second identifier corresponding to the first identifier. For implementation, refer to the implementation in which the core network device determines the second identifier in the embodiment shown in FIG. 3. Details are not described herein again.

S504A: The AMF sends the second identifier to the exposure governance management function entity.

Accordingly, the exposure governance management function entity may receive the second identifier from the AMF.

Because the second identifier may identify a terminal device or a communication service within a range of an access network device, the AMF may return the second identifier to the exposure governance management function entity in S504A. In this way, the exposure governance management function entity may query for radio network data about the terminal device or the communication service based on the second identifier.

S505A: The exposure governance management function entity sends the second identifier and the data type information to the access network device.

Accordingly, the access network device may receive the second identifier and the data type information from the exposure governance management function entity.

Because the second identifier identifies the terminal device or the communication service within the range of the access network device, the access network device may determine the terminal device or the communication service based on the second identifier. The access network device may query for the radio network data about the terminal device or the communication service based on the data type information.

S506A: The access network device sends target radio network data to the exposure governance management function entity.

Accordingly, the exposure governance management function entity receives the radio network data from the access network device.

The access network device may send, to the exposure governance management function entity, the radio network data that is about the terminal device or the communication service and that is obtained through the query.

S507A: The exposure governance management function entity sends the target radio network data to the third-party server.

Accordingly, the third-party server receives the radio network data from the exposure governance management function entity.

For example, the exposure governance management function entity may send a service response message of the service request message in S501 to the third-party server, where the service response message may carry the radio network data.

Based on S502A to S507A above, the exposure governance management function entity may request, based on the second identifier obtained from the AMF, the access network device to query for the radio network data, and send the obtained radio network data to the third-party server. The following describes a technical solution in which the AMF requests the access network device to query for the radio network data in S502B to S506B.

S502B: The exposure governance management function entity sends the first identifier and the data type information to the AMF.

Accordingly, the AMF receives the first identifier and the data type information from the exposure governance management function entity.

The exposure governance management function entity may request, via the first identifier and the data type information, the AMF to query the access network device for the radio network data that is about the terminal device or the communication service and that corresponds to the first identifier. The AMF may determine a second identifier based on the first identifier. For implementation, refer to the foregoing implementation in which the core network device determines the second identifier. Details are not described herein again.

S503B: The AMF sends the second identifier, the data type information, and a return address to the access network device.

Accordingly, the access network device may receive the second identifier, the data type information, and the return address from the AMF.

The return address may be an address of the exposure governance management function entity, for example, the address of the exposure governance management function entity in S402, and is used by the access network device to send the radio network data obtained through the query.

Optionally, the embodiment shown in FIG. 5 may further include the following operation S504B.

S504B: The access network device sends first information to the AMF.

Accordingly, the AMF receives the first information from the access network device.

The first information may indicate that the access network device receives the second identifier, the data type information, and the return address. For example, the first information may be status information, indicating that the access network device has received the foregoing information.

Because the second identifier identifies the terminal device or the communication service within a range of the access network device, the access network device may determine the terminal device or the communication service based on the second identifier. The access network device may query for the radio network data about the terminal device or the communication service based on the data type information.

S505B: The access network device sends target radio network data to the return address.

For example, the access network device may send, to the exposure governance management function entity via the return address, the radio network data obtained through the query. In this way, the exposure governance management function entity may receive the radio network data from the access network device.

S506B: The exposure governance management function entity sends the target radio network data to the third-party server.

Accordingly, the third-party server receives the radio network data from the exposure governance management function entity.

For example, the exposure governance management function entity may send a service response message of the service request message in S501 to the third-party server, where the service response message may carry the radio network data.

Based on the embodiment shown in FIG. 5, the third-party server may query for the radio network data about the terminal device or the communication service by using the first identifier, to optimize a service or an application service based on the radio network data. In addition, because the core network device like the AMF cannot obtain the radio network data, but the access network device sends, to the management function entity, the radio network data obtained through the query, data security of the terminal device or the communication service can be improved.

In the foregoing case 1, the management function entity may determine that the radio network data needed by the third-party server is exclusive to a radio network side, that is, is provided by the access network device. Therefore, the management function entity may request the access network device to query for the radio network data. In the following case 2, the management function entity may be incapable of determining whether the radio network data needed by the third-party server is provided by the core network device or is provided by the access network device. Therefore, the management function entity may request the core network device to query for the radio network data, and the core network device determines whether the radio network data needed by the third-party server is provided by the access network device or is provided by the core network device. The following provides descriptions by using the case 2.

Case 2: The management function entity sends the first identifier to the NEF.

In a possible implementation, when sending the first identifier to the core network device, the management function entity may send the first identifier to the NEF. In a possible case, the management function entity may include an exposure governance management function entity. In other words, the exposure governance management function entity may send the first identifier to the NEF. Optionally, the exposure governance management function entity may further send the data type information to the NEF. In this way, the NEF may determine, based on the data type information, whether the radio network data is provided by the core network device. If the NEF determines that the radio network data is provided by the core network device, the NEF may send, to the exposure governance management function entity, the radio network data that is about the terminal device or the communication service and that corresponds to the first identifier, and the exposure governance management function entity sends, to the third-party server, the radio network data obtained through the query.

If the NEF determines that the radio network data is provided by the access network device, in other words, the core network device cannot provide the radio network data, the core network device or the exposure governance management function entity may request the access network device to query for the radio network data.

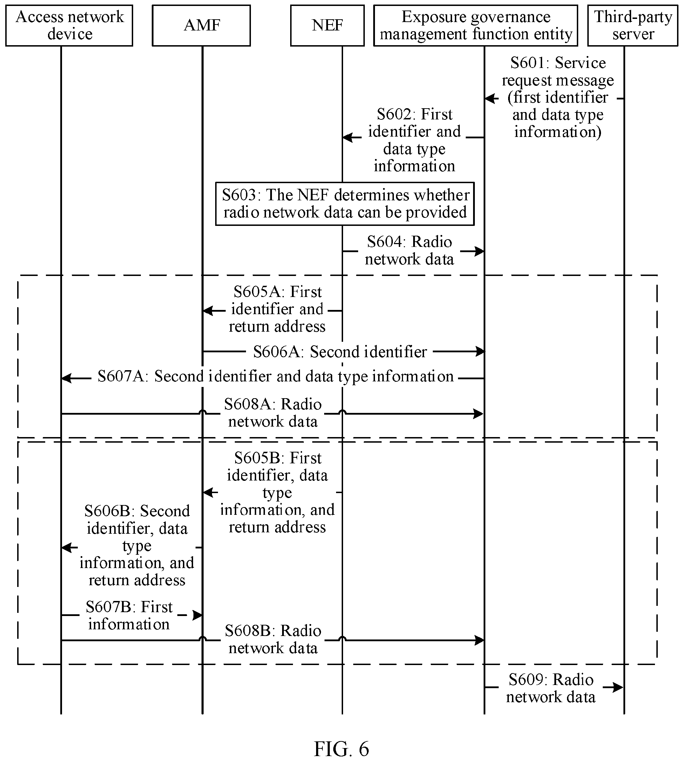

The following provides descriptions by using FIG. 6. FIG. 6 is an example flowchart of a data query method according to an embodiment of this application. The following operations may be included.

S601: A third-party server sends a service request message to an exposure governance management function entity.

Accordingly, the exposure governance management function entity receives the service request message from the third-party server.

The service request message may include a first identifier and data type information. Optionally, the service request message may further include UE assistance information. S601 is a possible implementation of S301. For implementation, refer to S301. Details are not described herein again.

S602: The exposure governance management function entity sends the first identifier and the data type information to a NEF.

Accordingly, the NEF receives the first identifier and the data type information from the exposure governance management function entity.

The exposure governance management function entity may determine the corresponding NEF based on the UE assistance information or the first identifier. For implementation, refer to the foregoing implementation in which the management function entity determines the core network device. Details are not described herein again.

S603: The NEF determines whether radio network data can be provided.

For example, the NEF may determine a terminal device or a communication service based on the first identifier. The NEF may determine, based on the data type information, whether radio network data about the terminal device or the communication service can be provided. In other words, the NEF may determine whether the radio network data that is about the terminal device or the communication service and that corresponds to the data type information can be provided by a core network device.

If the NEF determines that the radio network data can be provided, S604 below may be performed. If the NEF determines that the radio network data cannot be provided, S605A to S608A below or S605B to S608B below may be performed.

S604: The NEF sends the radio network data to the exposure governance management function entity.

Accordingly, the exposure governance management function entity receives the radio network data from the NEF.

S605A: The NEF sends the first identifier and a return address to an AMF.

Accordingly, the AMF receives the first identifier and the return address from the NEF.

The NEF may request the AMF to associate the first identifier with a second identifier. The return address may be an address of the exposure governance management function entity, for example, the exposure governance management function entity in S602. The return address may be used by the AMF to send the second identifier.

S606A: The AMF sends the second identifier to the return address.

The AMF may determine the corresponding second identifier based on the first identifier received from the NEF in S605A. For implementation, refer to the implementation in which the core network device determines the second identifier in the embodiment shown in FIG. 3. Details are not described herein again.

S607A: The exposure governance management function entity sends the second identifier and the data type information to an access network device.

Accordingly, the access network device may receive the second identifier and the data type information from the exposure governance management function entity.

Because the second identifier identifies the terminal device or the communication service within a range of the access network device, the access network device may determine the terminal device or the communication service based on the second identifier. The access network device may query for the radio network data about the terminal device or the communication service based on the data type information.

S608A: The access network device sends target radio network data to the exposure governance management function entity.

Accordingly, the exposure governance management function entity receives the radio network data from the access network device.

The access network device may send, to the exposure governance management function entity, the radio network data that is about the terminal device or the communication service and that is obtained through the query.

Based on S605A to S608A above, the exposure governance management function entity may request, based on the second identifier obtained from the AMF, the access network device to query for the radio network data, and obtain the radio network data about the terminal device or the communication service from the access network device. The following describes a technical solution in which an AMF requests an access network device to query for the radio network data in S605B to S608B.

S605B: The NEF sends the first identifier, the data type information, and a return address to the AMF.

Accordingly, the AMF may receive the first identifier, the data type information, and the return address from the NEF.

The NEF may request the AMF to request the access network device to query for the radio network data. The return address may be an address of the exposure governance management function entity, for example, the address of the exposure governance management function entity in S602. The return address may be used by the access network device to send target radio network data.

S606B: The AMF sends a second identifier, the data type information, and the return address to the access network device.

Accordingly, the access network device may receive the second identifier, the data type information, and the return address from the AMF.

The AMF may determine the corresponding second identifier based on the first identifier. For implementation, refer to the implementation in which the core network device determines the second identifier in the embodiment shown in FIG. 3. Details are not described herein again.

Optionally, the embodiment shown in FIG. 6 may further include the following operation S607B.

S607B: The access network device sends first information to the AMF.

Accordingly, the AMF receives the first information from the access network device.

The first information may indicate that the access network device receives the second identifier, the data type information, and the return address. For example, the first information may be status information, indicating that the access network device has received the foregoing information.

Because the second identifier identifies the terminal device or the communication service within a range of the access network device, the access network device may determine the terminal device or the communication service based on the second identifier. The access network device may query for the radio network data about the terminal device or the communication service based on the data type information.

S608B: The access network device sends the target radio network data to the return address.

For example, the access network device may send, to the exposure governance management function entity via the return address, the radio network data obtained through the query. In this way, the exposure governance management function entity may receive the radio network data from the access network device.

The exposure governance management function entity may receive the radio network data from the core network device through S605A to S608A or S605B to S608B above. The embodiment shown in FIG. 6 further includes the following operation S609.

S609: The exposure governance management function entity sends the target radio network data to the third-party server.

Accordingly, the third-party server receives the radio network data from the exposure governance management function entity.

For example, the exposure governance management function entity may send a service response message of the service request message in S601 to the third-party server, where the service response message may carry the radio network data.

Based on the foregoing case 2, the core network device (for example, the NEF) may determine whether the radio network data requested by the third-party server may be provided by the core network device. If the core network device may provide the radio network data requested by the third-party server, the core network device may send the target radio network data to the exposure governance management function entity. If the core network device cannot provide the radio network data requested by the third-party server, the core network device may request the access network device to query for the radio network data. Through the foregoing case 2, radio network data about the core network device and radio network data about the access network device may be exposed to the third-party server.

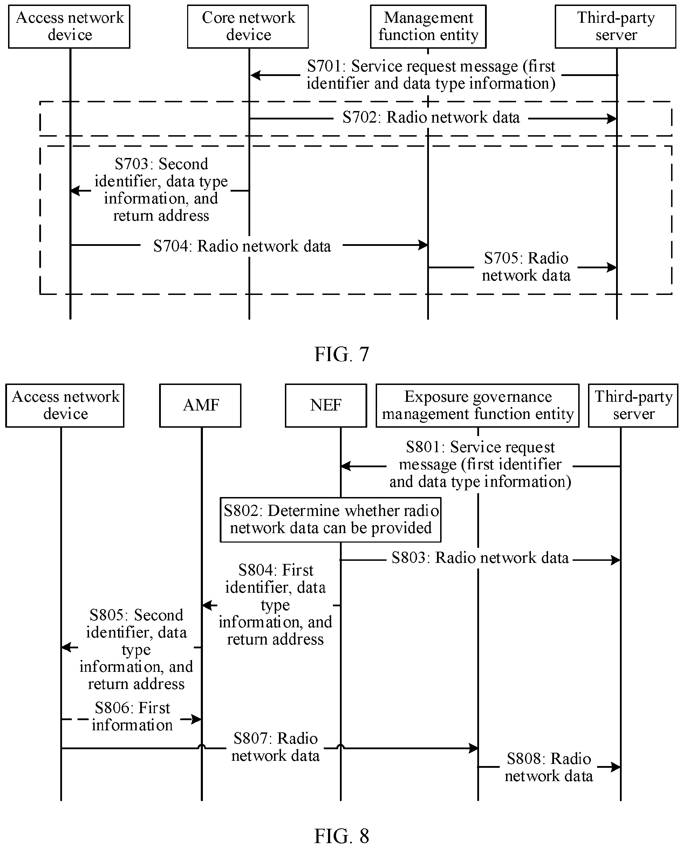

In the embodiments shown in FIG. 3 to FIG. 6, the management function entity receives the service request message from the third-party server. In an embodiment of this application, a core network device may alternatively receive a service request message from a third-party server. The following provides descriptions by using FIG. 7.

FIG. 7 is an example flowchart of a data query method according to an embodiment of this application. The following operations may be included.

S701: A third-party server sends a service request message to a core network device.

Accordingly, the core network device receives the service request message from the third-party server.

The service request message may include a first identifier and data type information. The first identifier may identify a terminal device or a communication service within ranges of the third-party server, a management function entity, and the core network device. The data type information may indicate a type of radio network data that is about the terminal device or the communication service and that is needed by the third-party server.

It may be understood that, for implementation of the first identifier and the data type information, refer to the embodiment shown in FIG. 3. Details are not described herein again.

In a possible case, the third-party server may send a tenant ID to the core network device, where the tenant ID may uniquely identify the third-party server within the range of the management function entity. For example, the service request message may carry the tenant ID. In this way, the core network device may determine the corresponding management function entity based on the tenant ID, and generate an address of the management function entity.

In an example, the core network device may determine whether the radio network data needed by the third-party server may be provided by the core network device. If the radio network data may be provided by the core network device, the following operation S702 may be performed. If the core network device cannot provide the radio network data, S703 may be performed.

S702: The core network device sends target radio network data to the third-party server.

Accordingly, the third-party server receives the radio network data from the core network device.

S703: The core network device sends a second identifier, the data type information, and a return address to an access network device.

Accordingly, the access network device receives the second identifier, the data type information, and the return address from the core network device.

The second identifier may identify the terminal device or the communication service within a range of the access network device. It may be understood that the return address may be determined by the core network device based on the tenant ID, and the core network device may determine the corresponding management function entity based on the tenant ID. The return address may be the address of the corresponding management function entity, and may be used by the access network device to send target radio network data.

The core network device may determine the corresponding second identifier based on the first identifier. For implementation, refer to the implementation in which the core network device determines the second identifier in the embodiment shown in FIG. 3. Details are not described herein again.

S704: The access network device sends the target radio network data to the return address.

The access network device may determine the terminal device or the communication service based on the second identifier. The access network device may query for the radio network data about the terminal device or the communication service based on the data type information, and send, to the return address, the radio network data obtained through the query.

Optionally, before S704 and after S703, the access network device may send first information to the core network device. The first information may indicate that the access network device receives the second identifier, the data type information, and the return address. For example, the first information may be status information, indicating that the access network device has received the foregoing information.

S705: The management function entity sends the target radio network data to the third-party server.

Accordingly, the third-party server receives the target radio network data from the management function entity.

Because the return address is the address of the management function entity, the management function entity may receive, from the access network device, the radio network data obtained through the query. **In** this case, the management function entity may send the received radio network data to the third-party server.

According to the foregoing solution, the core network device determines whether the radio network data needed by the third-party server is provided by the core network device or is provided by the access network device, and sends the target radio network data to the third-party server when the core network device may provide the radio network data; or requests, when the core network device cannot provide the radio network data, the access network device to query for the radio network data, to expose radio network data on a core network device side and an access network device side to the third-party server. **In** addition, the access network device sends, to the management function entity, the radio network data obtained through the query, and then the management function entity sends the target radio network data to the third-party server, so that a case in which the radio network data is exposed to the core network device can be avoided, and data security can be improved.

In a possible implementation, the core network device may include a NEF and an AMF. The NEF may receive the service request message from the third-party server, and the NEF determines whether the radio network data can be provided. In addition, the AMF may determine the second identifier, and the AMF requests the access network device to query for the radio network data. The following provides descriptions by using FIG. 8.

FIG. 8 is an example flowchart of a data query method according to an embodiment of this application. The following operations may be included.

S801: A third-party server sends a service request message to a NEF.

Accordingly, the NEF receives the service request message from the third-party server.

The service request message may include a first identifier and data type information. Optionally, the service request message may further include UE assistance information. S801 is a possible implementation of S701. For implementation, refer to S701. Details are not described herein again. In a possible case, the service request message may carry a tenant ID, and the tenant ID may identify the third-party server.

S802: The NEF determines whether radio network data can be provided.

For example, the NEF may determine a terminal device or a communication service based on the first identifier. The NEF may determine, based on the data type information, whether radio network data about the terminal device or the communication service can be provided. In other words, the NEF may determine whether the radio network data that is about the terminal device or the communication service and that corresponds to the data type information can be provided by a core network device.

If the NEF determines that the radio network data can be provided, S803 below may be performed. If the NEF determines that the radio network data cannot be provided, S804 to S808 below may be performed.

S803: The NEF sends the radio network data to the third-party server.

Accordingly, the third-party server receives the radio network data from the NEF.

For example, the NEF may send a service response message of the service request message in S801 to the third-party server, where the service response message may carry the radio network data.

S804: The NEF sends the first identifier, the data type information, and a return address to an AMF.

Accordingly, the AMF may receive the first identifier, the data type information, and the return address from the NEF.

The NEF may request the AMF to request an access network device to query for the radio network data. The return address may be an address of an exposure governance management function entity, and may be determined by the NEF based on the tenant ID. For implementation, refer to the implementation in which the core network device determines the return address in the embodiment shown in FIG. 7. Details are not described herein again. The return address may be used by the access network device to send target radio network data.

S805: The AMF sends a second identifier, the data type information, and the return address to the access network device.

Accordingly, the access network device may receive the second identifier, the data type information, and the return address from the AMF.

The AMF may determine the corresponding second identifier based on the first identifier. For implementation, refer to the implementation in which the core network device determines the second identifier in the embodiment shown in FIG. 3. Details are not described herein again.

Optionally, the embodiment shown in FIG. 8 may further include the following operation S806.

S806: The access network device sends first information to the AMF.

Accordingly, the AMF receives the first information from the access network device.

The first information may indicate that the access network device receives the second identifier, the data type information, and the return address. For example, the first information may be status information, indicating that the access network device has received the foregoing information.

Because the second identifier identifies the terminal device or the communication service within a range of the access network device, the access network device may determine the terminal device or the communication service based on the second identifier. The access network device may query for the radio network data about the terminal device or the communication service based on the data type information.

S807: The access network device sends the target radio network data to the return address.

For example, the access network device may send, to the exposure governance management function entity via the return address, the radio network data obtained through the query. In this way, the exposure governance management function entity may receive the radio network data from the access network device.

S808: The exposure governance management function entity sends the target radio network data to the third-party server.

Accordingly, the third-party server receives the radio network data from the exposure governance management function entity.

Based on the embodiments shown in FIG. 3 to FIG. 8, embodiments of this application provide the data query method. In the method, the third-party server may request to query for the radio network data about the terminal device or the communication service, to optimize the service or the application service. Embodiments of this application further provide a data configuration method. In the method, a third-party server may request to configure radio network data about a terminal device or a communication service.

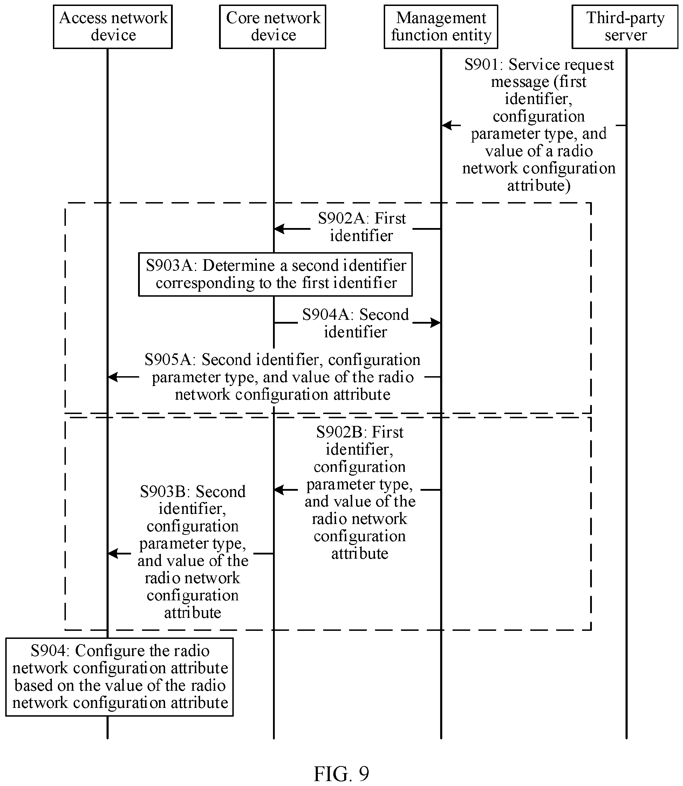

FIG. 9 is an example flowchart of a data configuration method according to an embodiment of this application. The following operations may be included.

S901: A management function entity receives a service request message from a third-party server.

Accordingly, the third-party server sends the service request message to the management function entity.

**In** a possible implementation, the service request message may include a first identifier, a configuration parameter type, and a value of a radio network configuration attribute. The first identifier may identify a terminal device or a communication service within ranges of the third-party server, the management function entity, and a core network device. The configuration parameter type may indicate a type of a radio network configuration attribute that is about the terminal device or the communication service and that the third-party server requests to configure. In other words, the third-party server may request to configure terminal-level data or service-level data. Optionally, the configuration parameter type may include the radio network configuration attribute like a throughput, delay information, radio available bandwidth estimation information, delay estimation information, or terminal-level high-precision timing information.

The value of the radio network configuration attribute may indicate a value of the radio network configuration attribute that is about the terminal device or the communication service and that the third-party server expects to configure.

It may be understood that, for implementation of the first identifier, refer to the first identifier in the embodiment shown in FIG. 3; and for implementation of the configuration parameter type, refer to the data type information in the embodiment shown in FIG. 3. A difference between the embodiment shown in FIG. 9 and the embodiment shown in FIG. 3 lies in that the data type information in the embodiment shown in FIG. 3 indicates the type of the radio network data, for example, the radio network performance data, that is about the terminal device or the communication service and that is needed by the third-party server, and the configuration parameter type in the embodiment shown in FIG. 9 indicates the radio network configuration attribute that the third-party server requests to configure.

In an example, the management function entity may request an access network device to configure the radio network configuration attribute about the terminal device or the communication service. In this example, the following operations S902A to S905A may be performed.

S902A: The management function entity sends the first identifier to the core network device.

Accordingly, the core network device receives the first identifier from the management function entity.

For example, the management function entity may send the first identifier to an AMF. For another example, the management function entity may send the first identifier to a NEF.

S903A: The core network device determines a second identifier corresponding to the first identifier.

In a possible implementation, the core network device may associate the first identifier with the second identifier, where the second identifier may be allocated by the core network device, and the second identifier identifies the terminal device or the communication service inside the access network device. For implementation of the second identifier, refer to the second identifier in the embodiment shown in FIG. 3. Details are not described herein again.

It may be understood that the core network device may determine the second identifier based on the first identifier. For implementation, refer to the implementation in which the core network device determines the second identifier in the embodiment shown in FIG. 3. Details are not described herein again.

S904A: The core network device may send the second identifier to the management function entity.

Accordingly, the management function entity may receive the second identifier from the core network device.

The second identifier corresponds to the first identifier in S902A. In this way, the management function entity may request, based on the second identifier, the access network device to configure data corresponding to the configuration parameter type.

S905A: The management function entity sends the second identifier, the configuration parameter type, and the value of the radio network configuration attribute to the access network device.

Accordingly, the access network device receives the second identifier, the configuration parameter type, and the value of the radio network configuration attribute from the management function entity.

Based on S902A to S905A above, the management function entity may request the access network device to configure the radio network configuration attribute about the terminal device or the communication service. In the following, through S902B and S903B, the core network device may request an access network device to configure the radio network configuration attribute about the terminal device or the communication service.

S902B: The management function entity sends the first identifier, the configuration parameter type, and the value of the radio network configuration attribute to the core network device.

Accordingly, the core network device receives the first identifier, the configuration parameter type, and the value of the radio network configuration attribute from the management function entity.

The core network device may determine a second identifier based on the first identifier. For implementation, refer to the implementation in which the core network device determines the second identifier in the embodiment shown in FIG. 3. Details are not described herein again.

S903B: The core network device sends the second identifier, the configuration parameter type, and the value of the radio network configuration attribute to the access network device.

Accordingly, the access network device receives the second identifier, the configuration parameter type, and the value of the radio network configuration attribute from the core network device.

S904: The access network device configures the radio network configuration attribute based on the value of the radio network configuration attribute.

For example, the access network device may determine the terminal device or the communication service based on the second identifier, and configure, based on the value of the radio network configuration attribute, the radio network configuration attribute that is about the terminal device or the communication service and that corresponds to the configuration parameter type.

According to the foregoing solution, the third-party server may request to configure the radio network configuration attribute about the terminal device or the communication service. In comparison with a case in which only a coarse granularity-level radio network configuration attribute can be configured in a related technology, a fine granularity-level radio network configuration attribute is configured, to reduce impact on a service or an application service.

In a possible implementation, the access network device may send second information to the management function entity, where the second information may indicate that the configuration of the radio network configuration attribute is completed. In a possible case, when the management function entity requests the access network device to configure the radio network configuration attribute, the access network device may send the second information to the management function entity. The management function entity may send the second information to the third-party server. For example, the management function entity may send a service response message to the third-party server, where the service response message may carry the second information. Optionally, the second information may further carry the value of the radio network configuration attribute configured by the access network device.

In another possible case, when the core network device requests the access network device to configure the radio network configuration attribute, the core network device may send a return address to the access network device, where the return address is an address of the management function entity, and is used by the access network device to send the second information. For example, in S903B, the core network device may send the second identifier, the configuration parameter type, the value of the radio network configuration attribute, and the return address to the access network device. **In** this way, the access network device sends the second information to the return address, to notify the management function entity that the configuration of the radio network configuration attribute is completed. The management function entity may send the second information to the third-party server. For example, the management function entity may send a service response message to the third-party server, where the service response message may carry the second information. Optionally, the second information may further carry the value of the radio network configuration attribute configured by the access network device.

In a possible implementation, the core network device in the embodiment shown in FIG. 9 may include the AMF or the NEF. The following separately uses a case a and a case b for description.

Case a: The core network device includes the AMF.

For example, the management function entity may send the first identifier to the AMF. For another example, the management function entity may send the first identifier, the configuration parameter type, and the value of the radio network configuration attribute to the AMF. In a possible case, the management function entity may include an exposure governance management function entity (for example, an EGMF) and a configuration management function entity (for example, an MnS provider). The exposure governance management function entity may receive the service request message from the third-party server. The exposure governance management function entity may request a radio resource configuration from the configuration management function entity. It may be understood that the radio resource configuration may indicate that a type of a service requested by the exposure governance management function entity from the configuration management function entity is the radio resource configuration. That is, the exposure governance management function entity requests to configure radio network configuration attribute that is about the terminal device or the communication service, that corresponds to the configuration parameter type, and that is indicated by the first identifier.

The configuration management function entity may be determined based on the configuration parameter type. For example, if the configuration parameter type indicates the type of the radio network configuration attribute that the third-party server requests to configure, in other words, the type of the service requested by the exposure governance management function entity is the radio resource configuration or the exposure governance management function entity requests the radio resource configuration from the configuration management function entity, the configuration management function entity may be an MnS provisioning service provider (MnS provisioning service producer).

It may be understood that the exposure governance management function entity may enhance an IOC, to configure a terminal device-level and/or communication service-level radio network configuration attribute. For implementation, refer to the implementation in which the IOC is enhanced in the embodiment shown in FIG. 3. Details are not described herein again.

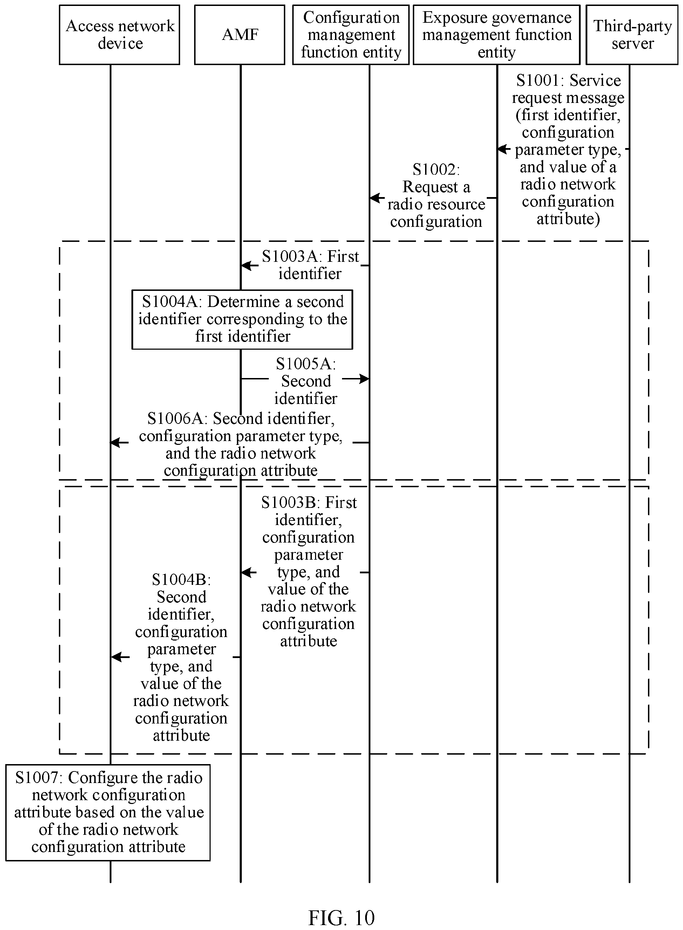

The following describes the foregoing cases by using FIG. 10. In the embodiment shown in FIG. 10, a management function entity includes an exposure governance management function entity and a configuration management function entity, and a core network device includes an AMF. FIG. 10 is an example flowchart of a data configuration method according to an embodiment of this application. The following operations may be included.

S1001: A third-party server sends a service request message to the exposure governance management function entity.

Accordingly, the exposure governance management function entity receives the service request message from the third-party server.

The service request message may include a first identifier, a configuration parameter type, and a value of a radio network configuration attribute. Optionally, the service request message may further include UE assistance information. S1001 is a possible implementation of S901. For implementation, refer to S901. Details are not described herein again.

S1002: The exposure governance management function entity requests a radio resource configuration from the configuration management function entity.

The exposure governance management function entity may indicate the first identifier, the configuration parameter type, and the value of the radio network configuration attribute to the configuration management function entity by requesting the radio resource configuration from the configuration management function entity. Optionally, the exposure governance management function entity may further indicate the UE assistance information to the configuration management function entity. For implementation of S1002, refer to the implementation in which the IOC is enhanced in the embodiment shown in FIG. 3. Details are not described herein again.

In an example, the configuration management function entity may send the first identifier to the AMF, to request the AMF to associate the first identifier with a second identifier. The configuration management function entity may determine the corresponding AMF based on the UE assistance information or the first identifier. For implementation, refer to the foregoing implementation in which the management function entity determines the core network device. Details are not described herein again. In this example, after S1002 is performed, S1003A to S1006A may be performed.

In another example, the configuration management function entity may send the first identifier, the configuration parameter type, and the value of the radio network configuration attribute to the AMF, and the AMF requests an access network device to configure a radio network configuration attribute that is about a terminal device or a communication service and that corresponds to the first identifier. The configuration management function entity may determine the corresponding AMF based on the UE assistance information or the first identifier. For implementation, refer to the foregoing implementation in which the management function entity determines the core network device. Details are not described herein again. In this example, after S 1002 is performed, S1003B and S1004B may be performed.

S1003A: The configuration management function entity sends the first identifier to the AMF.

Accordingly, the AMF receives the first identifier from the configuration management function entity.

The configuration management function entity may send the first identifier to the AMF, to request the AMF to associate the first identifier with the second identifier.

S1004A: The AMF determines the second identifier corresponding to the first identifier.

For example, the AMF may determine, based on a prestored correspondence between the first identifier and the second identifier, the second identifier corresponding to the first identifier. For implementation, refer to the implementation in which the core network device determines the second identifier in the embodiment shown in FIG. 3. Details are not described herein again.

S1005A: The AMF sends the second identifier to the configuration management function entity.

Accordingly, the configuration management function entity may receive the second identifier from the AMF.

Because the second identifier may identify a terminal device or a communication service within a range of an access network device, the AMF may return the second identifier to the configuration management function entity in S405A. In this way, the configuration management function entity may request, based on the second identifier, to configure a radio network configuration attribute about the terminal device or the communication service.

S1006A: The configuration management function entity sends the second identifier, the configuration parameter type, and the value of the radio network configuration attribute to the access network device.

Accordingly, the access network device may receive the second identifier, the configuration parameter type, and the value of the radio network configuration attribute from the configuration management function entity.

Based on S1003A to S1006A above, the configuration management function entity may request, based on the second identifier obtained from the AMF, the access network device to configure the radio network configuration attribute. The following describes a technical solution in which the AMF requests the access network device to configure the radio network configuration attribute in S1003B and S1004B.

S1003B: The configuration management function entity sends the first identifier, the configuration parameter type, and the value of the radio network configuration attribute to the AMF.

Accordingly, the AMF receives the first identifier, the configuration parameter type, and the value of the radio network configuration attribute from the configuration management function entity.

The configuration management function entity may request, via the first identifier, the configuration parameter type, and the value of the radio network configuration attribute, the AMF to request the access network device to configure the radio network configuration attribute that is about the terminal device or the communication service and that corresponds to the first identifier. The AMF may determine a second identifier based on the first identifier. For implementation, refer to the foregoing implementation in which the core network device determines the second identifier. Details are not described herein again.

S1004B: The AMF sends the second identifier, the configuration parameter type, and the value of the radio network configuration attribute to the access network device.

Accordingly, the access network device may receive the second identifier, the configuration parameter type, and the value of the radio network configuration attribute from the AMF.

S1007: The access network device configures the radio network configuration attribute based on the value of the radio network configuration attribute.

Because the second identifier identifies the terminal device or the communication service within the range of the access network device, the access network device may determine the terminal device or the communication service based on the second identifier. The access network device may configure the radio network configuration attribute about the terminal device or the communication service based on the configuration parameter type and the value of the radio network configuration attribute. S1007 is a possible implementation of S904. For implementation, refer to S904.

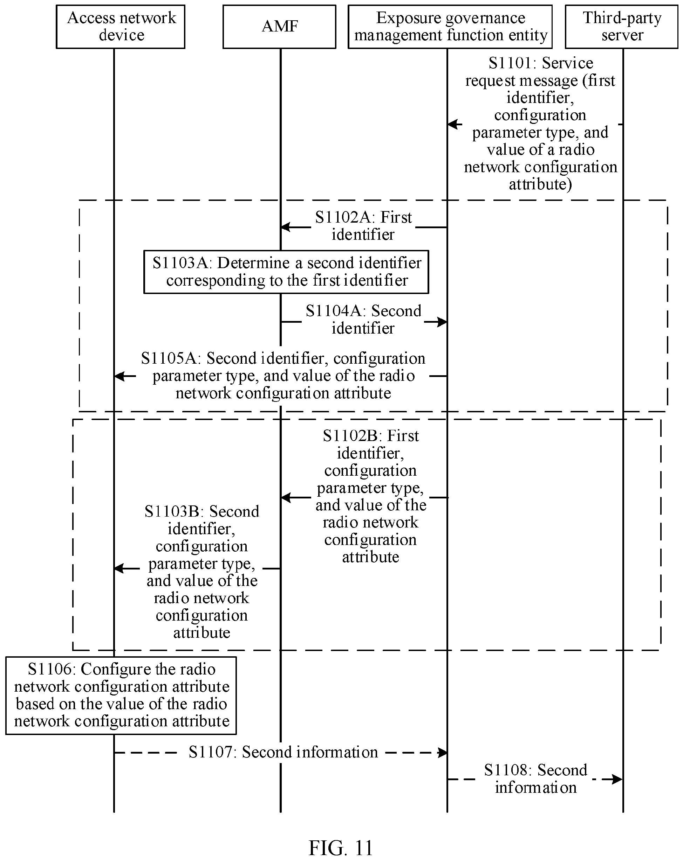

In the embodiment shown in FIG. 10, the management function entity may include the configuration management function entity and the exposure governance management function entity. In another possible case, a management function entity may include an exposure governance management function entity. The following provides descriptions by using FIG. 11.

FIG. 11 is an example flowchart of a data configuration method according to an embodiment of this application. The following operations may be included.

S1101: A third-party server sends a service request message to an exposure governance management function entity.

Accordingly, the exposure governance management function entity receives the service request message from the third-party server.

The service request message may include a first identifier, a configuration parameter type, and a value of a radio network configuration attribute. Optionally, the service request message may further include UE assistance information. S1101 is a possible implementation of S901. For implementation, refer to S901. Details are not described herein again.

In an example, the exposure governance management function entity may send the first identifier to an AMF, to request the AMF to associate the first identifier with a second identifier. The exposure governance management function entity may determine the corresponding AMF based on the UE assistance information or the first identifier. For implementation, refer to the foregoing implementation in which the management function entity determines the core network device. Details are not described herein again. In this example, after S1101 is performed, S1102A to S1105A may be performed.

In another example, the exposure governance management function entity may send the first identifier, the configuration parameter type, and the value of the radio network configuration attribute to an AMF, and the AMF requests an access network device to configure a radio network configuration attribute that is about a terminal device or a communication service and that corresponds to the first identifier. The exposure governance management function entity may determine the corresponding AMF based on the UE assistance information or the first identifier. For implementation, refer to the foregoing implementation in which the management function entity determines the core network device. Details are not described herein again. In this example, after S1101 is performed, S1102B and S1103B may be performed.

S1102A: The exposure governance management function entity sends the first identifier to the AMF.

Accordingly, the AMF receives the first identifier from the exposure governance management function entity.

The exposure governance management function entity may send the first identifier to the AMF, to request the AMF to associate the first identifier with the second identifier.

S1103A: The AMF determines the second identifier corresponding to the first identifier.

For example, the AMF may determine, based on a prestored correspondence between the first identifier and the second identifier, the second identifier corresponding to the first identifier. For implementation, refer to the implementation in which the core network device determines the second identifier in the embodiment shown in FIG. 3. Details are not described herein again.

S1104A: The AMF sends the second identifier to the exposure governance management function entity.

Accordingly, the exposure governance management function entity may receive the second identifier from the AMF.

Because the second identifier may identify a terminal device or a communication service within a range of an access network device, the AMF may return the second identifier to the exposure governance management function entity in S504A. In this way, the exposure governance management function entity may request, based on the second identifier, to configure a radio network configuration attribute about the terminal device or the communication service.

S1105A: The exposure governance management function entity sends the second identifier, the configuration parameter type, and the value of the radio network configuration attribute to the access network device.

Accordingly, the access network device may receive the second identifier, the configuration parameter type, and the value of the radio network configuration attribute from the exposure governance management function entity.

Based on S1102A to S1105A above, the exposure governance management function entity may request, based on the second identifier obtained from the AMF, the access network device to configure the radio network configuration attribute. The following describes a technical solution in which the AMF requests the access network device to configure the radio network configuration attribute in S1102B and S1103B.

S1102B: The exposure governance management function entity sends the first identifier, the configuration parameter type, and the value of the radio network configuration attribute to the AMF.

Accordingly, the AMF receives the first identifier, the configuration parameter type, and the value of the radio network configuration attribute from the exposure governance management function entity.

The exposure governance management function entity may request, via the first identifier, the configuration parameter type, and the value of the radio network configuration attribute, the AMF to request the access network device to configure the radio network configuration attribute that is about the terminal device or the communication service and that corresponds to the first identifier. The AMF may determine a second identifier based on the first identifier. For implementation, refer to the foregoing implementation in which the core network device determines the second identifier. Details are not described herein again.

S1103B: The AMF sends the second identifier, the configuration parameter type, and the value of the radio network configuration attribute to the access network device.

Accordingly, the access network device may receive the second identifier, the configuration parameter type, and the value of the radio network configuration attribute from the AMF.

S1106: The access network device configures the radio network configuration attribute based on the value of the radio network configuration attribute.

Because the second identifier identifies the terminal device or the communication service within the range of the access network device, the access network device may determine the terminal device or the communication service based on the second identifier. The access network device may configure the radio network configuration attribute about the terminal device or the communication service based on the configuration parameter type and the value of the radio network configuration attribute. S1106 is a possible implementation of S904. For implementation, refer to S904.

Optionally, the embodiment shown in FIG. 11 may further include the following operation S1107.

S1107: The access network device sends second information to the exposure governance management function entity.

Accordingly, the exposure governance management function entity receives the second information from the access network device.

The second information may indicate that the configuration of the radio network configuration attribute is completed. Optionally, the second information may further carry the value of the radio network configuration attribute configured by the access network device. For implementation of the second information, refer to the embodiment shown in FIG. 9. Details are not described herein again.

It may be understood that the access network device may send the second information to a return address, to send the second information to the exposure governance management function entity. For example, in S1103B, the AMF may further send the return address to the access network device, where the return address may be an address of the exposure governance management function entity, and indicates the access network device to send the second information. In this way, the access network device may send the second information to the return address after the configuration of the radio network configuration attribute, for example, S1107.

S1108: The exposure governance management function entity sends the second information to the third-party server.

Accordingly, the third-party server receives the second information from the exposure governance management function entity.

Based on the foregoing case a, the management function entity may request, based on the radio network configuration attribute that the third-party server requests to configure, the access network device to configure the radio network configuration attribute about the terminal device or the communication service. In the following case b, the core network device may alternatively configure the radio network configuration attribute about the terminal device or the communication service. Optionally, when the core network device cannot configure the radio network configuration attribute about the terminal device or the communication service, the core network device may request the access network device to configure the radio network configuration attribute about the terminal device or the communication service.

Case b: The core network device includes the NEF.

In a possible case, when sending the first identifier to the core network device, the management function entity may send the first identifier to the NEF. For example, in S902A, the management function entity may send the first identifier to the NEF.

In another possible case, when sending the first identifier, the configuration parameter type, and the value of the radio network configuration attribute to the core network device, the management function entity may send the first identifier, the configuration parameter type, and the value of the radio network configuration attribute to the NEF. For example, in S902B, the management function entity may send the first identifier, the configuration parameter type, and the value of the radio network configuration attribute to the NEF.

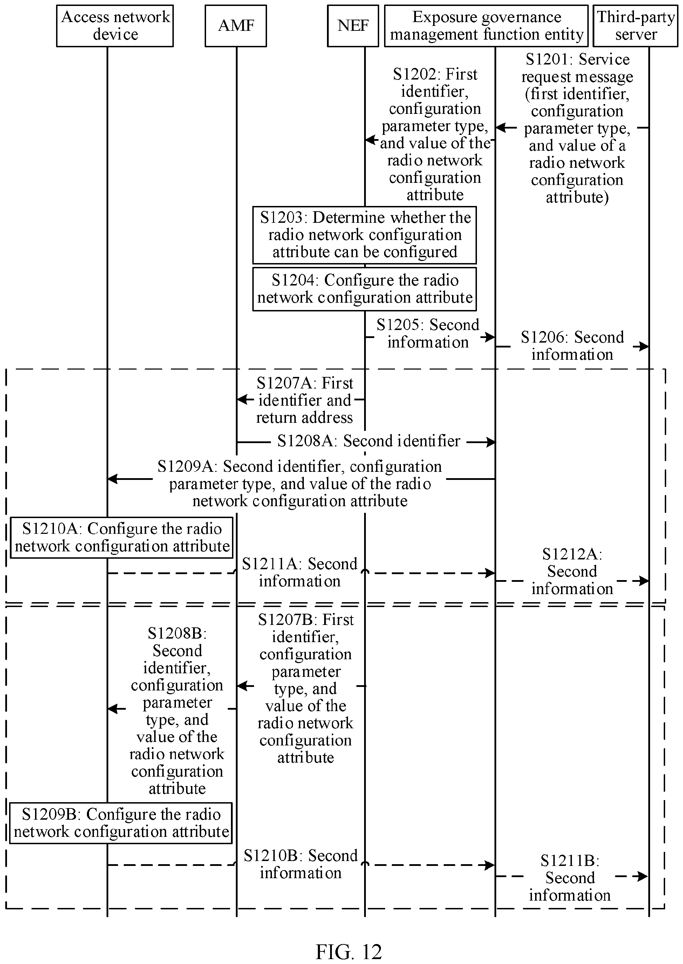

In this way, the NEF may determine, based on the radio network configuration attribute corresponding to the configuration parameter type, whether the radio network configuration attribute may be configured by the core network device, for example, whether the radio network configuration attribute may be configured by the NEF. If the NEF determines that the radio network configuration attribute may be configured by the core network device, the NEF configures the radio network configuration attribute about the terminal device or the communication service based on the first identifier. If the NEF determines that the radio network configuration attribute cannot be configured by the core network device, the core network device or the exposure governance management function entity may request the access network device to configure the radio network configuration attribute. The following provides descriptions by using FIG. 12.

FIG. 12 is an example flowchart of a data configuration method according to an embodiment of this application. The following operations may be included.

S1201: A third-party server sends a service request message to an exposure governance management function entity.

Accordingly, the exposure governance management function entity receives the service request message from the third-party server.

The service request message may include a first identifier, a configuration parameter type, and a value of a radio network configuration attribute. Optionally, the service request message may further include UE assistance information. S1201 is a possible implementation of S901. For implementation, refer to S901. Details are not described herein again.

S1202: The exposure governance management function entity sends the first identifier, the configuration parameter type, and the value of the radio network configuration attribute to a NEF.

Accordingly, the NEF receives the first identifier, the configuration parameter type, and the value of the radio network configuration attribute from the exposure governance management function entity.

The exposure governance management function entity may determine the corresponding NEF based on the UE assistance information or the first identifier. For implementation, refer to the foregoing implementation in which the management function entity determines the core network device. Details are not described herein again.

S1203: The NEF determines whether the radio network configuration attribute can be configured.

For example, the NEF may determine a terminal device or a communication service based on the first identifier. The NEF may determine, based on the configuration parameter type, whether a radio network configuration attribute about the terminal device or the communication service can be configured. In other words, the NEF may determine whether the radio network configuration attribute that is about the terminal device or the communication service and that corresponds to the configuration parameter type can be configured by the core network device.

If the NEF determines that the radio network configuration attribute can be configured, S1204 to S1206 below may be performed. If the NEF determines that the radio network configuration attribute cannot be configured, S1207A to S1212A below or S1207B to S1211B below may be performed.

S1204: The NEF configures the radio network configuration attribute.

Optionally, the embodiment shown in FIG. 12 may further include the following operation S1205.

S1205: The NEF sends second information to the exposure governance management function entity.

Accordingly, the exposure governance management function entity receives the second information from the NEF.

The second information may indicate that the configuration of the radio network configuration attribute is completed. Optionally, the second information may further carry the value of the radio network configuration attribute configured by the access network device. For implementation of the second information, refer to the embodiment shown in FIG. 9. Details are not described herein again.

S1206: The exposure governance management function entity sends the second information to the third-party server.

Accordingly, the third-party server receives the second information from the exposure governance management function entity.

S1207A: The NEF sends the first identifier and a return address to an AMF.

Accordingly, the AMF receives the first identifier and the return address from the NEF.

The NEF may request the AMF to associate the first identifier with a second identifier. The return address may be an address of the exposure governance management function entity, for example, the exposure governance management function entity in S1202. The return address may be used by the AMF to send the second identifier.

S1208A: The AMF sends the second identifier to the return address.

The AMF may determine the corresponding second identifier based on the first identifier received from the NEF in S1207A. For implementation, refer to the implementation in which the core network device determines the second identifier in the embodiment shown in FIG. 3. Details are not described herein again.

S1209A: The exposure governance management function entity sends the second identifier, the configuration parameter type, and the value of the radio network configuration attribute to an access network device.

Accordingly, the access network device may receive the second identifier, the configuration parameter type, and the value of the radio network configuration attribute from the exposure governance management function entity.

S1210A: The access network device configures the radio network configuration attribute.

For example, the access network device may determine the terminal device or the communication service based on the second identifier. The access network device may configure the radio network configuration attribute about the terminal device or the communication service based on the configuration parameter type and the value of the radio network configuration attribute.

Optionally, the embodiment shown in FIG. 12 may further include the following operation S1211A.

S1211A: The access network device sends second information to the exposure governance management function entity.

Accordingly, the exposure governance management function entity receives the second information from the access network device.

The second information may indicate that the configuration of the radio network configuration attribute is completed. Optionally, the second information may further carry the value of the radio network configuration attribute configured by the access network device. For implementation of the second information, refer to the embodiment shown in FIG. 9. Details are not described herein again.

S1212A: The exposure governance management function entity sends the second information to the third-party server.

Accordingly, the third-party server receives the second information from the exposure governance management function entity.

Based on S1207A to S1212A above, the exposure governance management function entity may request, based on the second identifier obtained from the AMF, the access network device to configure the radio network configuration attribute. The following describes a technical solution in which an AMF requests an access network device to configure the radio network configuration attribute in S1207B to S1211B.

S1207B: The NEF sends the first identifier, the configuration parameter type, and the value of the radio network configuration attribute to the AMF.

Accordingly, the AMF may receive the first identifier, the configuration parameter type, and the value of the radio network configuration attribute from the NEF.

The NEF may request the AMF to request the access network device to configure the radio network configuration attribute.

S1208B: The AMF sends a second identifier, the configuration parameter type, and the value of the radio network configuration attribute to the access network device.

Accordingly, the access network device may receive the second identifier, the configuration parameter type, and the value of the radio network configuration attribute from the AMF.

The AMF may determine the corresponding second identifier based on the first identifier. For implementation, refer to the implementation in which the core network device determines the second identifier in the embodiment shown in FIG. 3. Details are not described herein again.

S1209B: The access network device configures the radio network configuration attribute.

Because the second identifier identifies the terminal device or the communication service within a range of the access network device, the access network device may determine the terminal device or the communication service based on the second identifier. The access network device may configure the radio network configuration attribute about the terminal device or the communication service based on the configuration parameter type and the value of the radio network configuration attribute. S1209B is a possible implementation of S904. For implementation, refer to S904.

Optionally, the embodiment shown in FIG. 12 may further include the following operation S1210B.

S1210B: The access network device sends second information to the exposure governance management function entity.

Accordingly, the exposure governance management function entity receives the second information from the access network device.

The second information may indicate that the configuration of the radio network configuration attribute is completed. Optionally, the second information may further carry the value of the radio network configuration attribute configured by the access network device. For implementation of the second information, refer to the embodiment shown in FIG. 9. Details are not described herein again.

It may be understood that the access network device may send the second information to a return address, to send the second information to the exposure governance management function entity. For example, in S1208B, the AMF may further send the return address to the access network device, where the return address may be an address of the exposure governance management function entity, and indicates the access network device to send the second information. In this way, the access network device may send the second information to the return address after the configuration of the radio network configuration attribute, for example, S1212.

S1211B: The exposure governance management function entity sends the second information to the third-party server.

Accordingly, the third-party server receives the second information from the exposure governance management function entity.

Based on the foregoing case b, the core network device (for example, the NEF) may determine whether the radio network configuration attribute requested by the third-party server may be configured by the core network device. If the core network device may configure the radio network configuration attribute requested by the third-party server, the core network device configures the radio network configuration attribute about the terminal device or the communication service. If the core network device cannot configure the radio network configuration attribute requested by the third-party server, the core network device may request the access network device to configure the radio network configuration attribute.

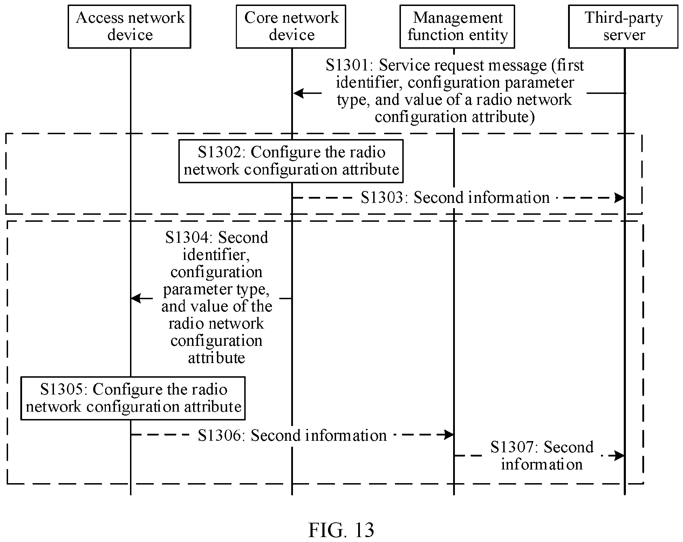

In the embodiments shown in FIG. 9 to FIG. 12, the management function entity receives the service request message from the third-party server. In an embodiment of this application, a core network device may alternatively receive a service request message from a third-party server. The following provides descriptions by using FIG. 13.

FIG. 13 is an example flowchart of a data query method according to an embodiment of this application. The following operations may be included.

S1301: A third-party server sends a service request message to a core network device.

Accordingly, the core network device receives the service request message from the third-party server.

The service request message may include a first identifier, a configuration parameter type, and a value of a radio network configuration attribute. The first identifier may identify a terminal device or a communication service outside an access network device. The configuration parameter type may indicate a type of a radio network configuration attribute that is about the terminal device or the communication service and that the third-party server requests to configure.

It may be understood that, for implementation of the first identifier and the configuration parameter type, refer to the embodiment shown in FIG. 3. Details are not described herein again.

In an example, the core network device may determine whether the radio network configuration attribute that the third-party server requests to configure may be configured by the core network device. If the radio network configuration attribute may be configured by the core network device, the following operation S1302 may be performed. If the core network device cannot configure the radio network configuration attribute, S1304 may be performed.

S1302: The core network device configures the radio network configuration attribute.

For example, the core network device may determine the terminal device or the communication service based on the first identifier, and configure the radio network configuration attribute about the terminal device or the communication service based on the configuration parameter type and the value of the radio network configuration attribute.

Optionally, the embodiment shown in FIG. 13 may further include the following operation S1303.

S1303: The core network device sends second information to the third-party server.

Accordingly, the third-party server receives the second information from the core network device.

The second information may indicate that the configuration of the radio network configuration attribute is completed. Optionally, the second information may further carry the value of the radio network configuration attribute configured by the access network device.

S1304: The core network device sends a second identifier, the configuration parameter type, and the value of the radio network configuration attribute to the access network device.

Accordingly, the access network device receives the second identifier, the configuration parameter type, and the value of the radio network configuration attribute from the core network device.

The second identifier may identify the terminal device or the communication service within a range of the access network device. The core network device may determine the corresponding second identifier based on the first identifier. For implementation, refer to the implementation in which the core network device determines the second identifier in the embodiment shown in FIG. 3. Details are not described herein again.

S1305: The access network device configures the radio network configuration attribute.

For example, the access network device may determine the terminal device or the communication service based on the second identifier, and configure, based on the value of the radio network configuration attribute, the radio network configuration attribute that is about the terminal device or the communication service and that corresponds to the configuration parameter type.

Optionally, the embodiment shown in FIG. 13 may further include the following operation S1306.

S1306: The access network device sends second information to a management function entity.

Accordingly, the management function entity receives the second information from the access network device.

The second information may indicate that the configuration of the radio network configuration attribute is completed. Optionally, the second information may further carry the value of the radio network configuration attribute configured by the access network device. For implementation of the second information, refer to the embodiment shown in FIG. 9. Details are not described herein again.

It may be understood that the access network device may send the second information to a return address, and the return address may be determined by the core network device based on a tenant ID. For example, in S1301, the third-party server may send the tenant ID to the core network device, where the tenant ID may uniquely identify the third-party server within a range of the management function entity. For example, the service request message may carry the tenant ID. In this way, the core network device may determine the corresponding management function entity based on the tenant ID, and generate an address of the management function entity.

S1307: The management function entity sends the second information to the third-party server.

Accordingly, the third-party server receives the second information from the management function entity.

It may be understood that the tenant ID may be carried in S1306, and the management function entity may send the second information to the corresponding third-party server based on the tenant ID.

According to the foregoing solution, the core network device determines whether the radio network configuration attribute that the third-party server requests to configure is configured by the core network device or is configured by the access network device. When the core network device may configure the radio network configuration attribute, a core network configures the radio network configuration attribute about the terminal device or the radio service. When the core network device cannot configure the radio network configuration attribute, the core network device requests the access network device to configure the radio network configuration attribute.

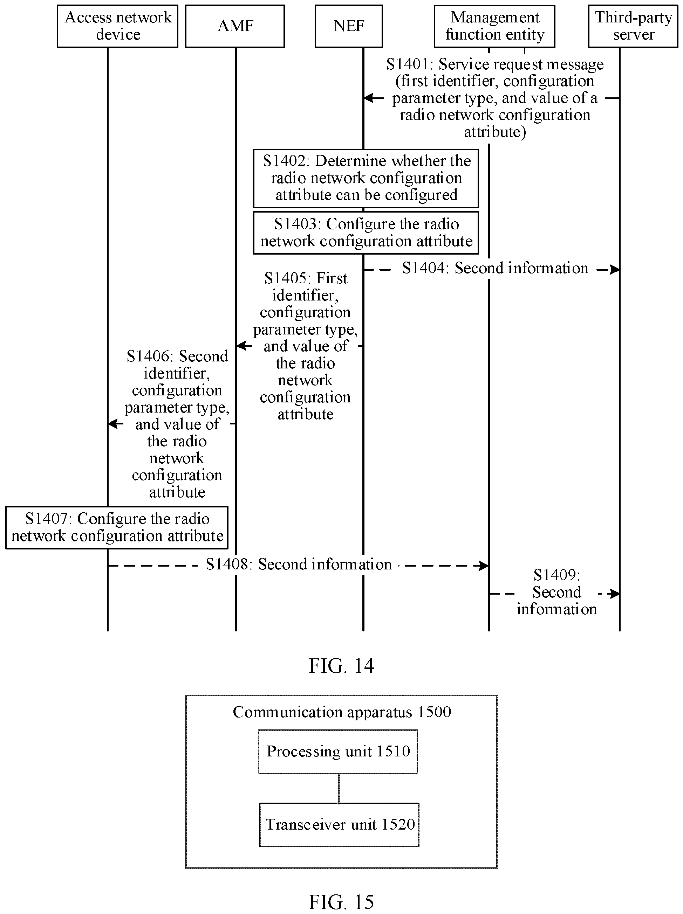

In a possible implementation, the core network device may include a NEF and an AMF. The NEF may receive the service request message from the third-party server, and the NEF determines whether the radio network configuration attribute can be configured. In addition, the AMF may determine the second identifier, and the AMF requests the access network device to configure the radio network configuration attribute. The following provides descriptions by using FIG. 14.

FIG. 14 is an example flowchart of a data query method according to an embodiment of this application. The following operations may be included.

S1401: A third-party server sends a service request message to a NEF.

Accordingly, the NEF receives the service request message from the third-party server.

The service request message may include a first identifier, a configuration parameter type, and a value of a radio network configuration attribute. The first identifier may identify a terminal device or a communication service outside an access network device. The configuration parameter type may indicate a type of a radio network configuration attribute that is about the terminal device or the communication service and that the third-party server requests to configure. It may be understood that, for implementation of the first identifier and the configuration parameter type, refer to the embodiment shown in FIG. 3. Details are not described herein again.

In a possible case, the service request message may carry a tenant ID, and the tenant ID may identify the third-party server.

S1402: The NEF determines whether the radio network configuration attribute can be configured.

For example, the NEF may determine the terminal device or the communication service based on the first identifier. The NEF may determine whether the radio network configuration attribute about the terminal device or the communication service can be configured. In other words, the NEF may determine whether the radio network configuration attribute that is about the terminal device or the communication service and that corresponds to the configuration parameter type can be configured by a core network device.

If the NEF determines that the radio network configuration attribute can be configured, S1403 below may be performed. If the NEF determines that the radio network configuration attribute cannot be provided, S1405 to S1409 below may be performed.

S1403: The NEF configures the radio network configuration attribute.

For example, the NEF may determine the terminal device or the communication service based on the first identifier, and configure the radio network configuration attribute about the terminal device or the communication service based on the configuration parameter type and the value of the radio network configuration attribute.

Optionally, the embodiment shown in FIG. 14 may further include the following operation S1404.

S1404: The NEF sends second information to the third-party server.

Accordingly, the third-party server receives the second information from the NEF.

The second information may indicate that the configuration of the radio network configuration attribute is completed. Optionally, the second information may further carry the value of the radio network configuration attribute configured by the access network device.

S1405: The NEF sends the first identifier, the configuration parameter type, and the value of the radio network configuration attribute to an AMF.

Accordingly, the AMF may receive the first identifier, the configuration parameter type, and the value of the radio network configuration attribute from the NEF.

The NEF may request the AMF to request the access network device to configure the radio network configuration attribute. Optionally, the NEF may send a return address to the AMF. The return address may be an address that is of a management function entity and that is determined by the NEF based on the tenant ID. For implementation, refer to the embodiment shown in FIG. 9. Details are not described herein again.

S1406: The AMF sends a second identifier, the configuration parameter type, and the value of the radio network configuration attribute to the access network device.

Accordingly, the access network device may receive the second identifier, the configuration parameter type, and the value of the radio network configuration attribute from the AMF.

The AMF may determine the corresponding second identifier based on the first identifier. For implementation, refer to the implementation in which the core network device determines the second identifier in the embodiment shown in FIG. 3. Details are not described herein again. Optionally, the AMF may send the return address to the access network device.

S1407: The access network device configures the radio network configuration attribute.

For example, the access network device may determine the terminal device or the communication service based on the second identifier, and configure, based on the value of the radio network configuration attribute, the radio network configuration attribute that is about the terminal device or the communication service and that corresponds to the configuration parameter type.

Optionally, the embodiment shown in FIG. 14 may further include the following operation S1408.

S1408: The access network device sends second information to the management function entity.

Accordingly, the management function entity receives the second information from the access network device.

The second information may indicate that the configuration of the radio network configuration attribute is completed. Optionally, the second information may further carry the value of the radio network configuration attribute configured by the access network device. For implementation of the second information, refer to the embodiment shown in FIG. 9. Details are not described herein again.

S 1409: The management function entity sends the second information to the third-party server.

Accordingly, the third-party server receives the second information from the management function entity.

It may be understood that the tenant ID may be carried in S1408, and the management function entity may send the second information to the corresponding third-party server based on the tenant ID.

The following describes, with reference to accompanying drawings, communication apparatuses configured to implement the foregoing methods in embodiments of this application. Therefore, all the foregoing content may be used in the following embodiments. Repeated content is not described again.

FIG. 15 is a schematic block diagram of a communication apparatus 1500 according to an embodiment of this application. The communication apparatus 1500 may accordingly implement the functions or the steps implemented by the core network device, the access network device, or the management function entity in the foregoing method embodiments. The communication apparatus may include a processing unit 1510 and a transceiver unit 1520. Optionally, a storage unit may further be included. The storage unit may be configured to store instructions (code or a program) and/or data. The processing unit 1510 and the transceiver unit 1520 may be coupled to the storage unit. For example, the processing unit 1510 may read the instructions (the code or the program) and/or the data in the storage unit, to implement a corresponding method. The foregoing units may be disposed independently, or may be partially or completely integrated.

In some possible implementations, the communication apparatus 1500 can accordingly implement the behavior and the functions of the core network device in the foregoing method embodiments. For example, the communication apparatus 1500 may be a core network device, or may be a component (for example, a chip or a circuit) used in the core network device. The transceiver unit 1520 may be configured to perform all receiving or sending operations performed by the core network device in the embodiments shown in FIG. 3 to FIG. 14, for example, S302 in the embodiment shown in FIG. 3, and/or configured to support another process of the technology described in this specification. The processing unit 1510 is configured to perform all operations other than the receiving or sending operations and performed by the core network device in the embodiments shown in FIG. 3 to FIG. 14.

For example, the transceiver unit 1520 is configured to receive a first identifier and data type information, where the first identifier identifies a terminal device or a communication service outside an access network device, and the data type information indicates a type of radio network performance data that is about the terminal device or the communication service and that is needed by a third-party server. The processing unit 1510 is configured to determine a second identifier based on the first identifier. The transceiver unit 1520 is further configured to send the second identifier, the data type information, and a return address to the access network device, where the second identifier identifies the terminal device or the communication service inside the access network device; and the return address is an address of a management function entity, and indicates the access network device to send target radio network performance data to the return address.

For another example, the transceiver unit 1520 is configured to receive a first identifier from a management function entity, where the first identifier identifies a terminal device or a communication service outside an access network device. The processing unit 1510 is configured to determine a second identifier based on the first identifier. The transceiver unit 1520 is further configured to send, to the management function entity, the second identifier corresponding to the first identifier, where the second identifier identifies the terminal device or the communication service inside the access network device.

For another example, the transceiver unit 1520 is configured to receive a first identifier, a configuration parameter type, and a value of a radio network configuration attribute, where the first identifier identifies a terminal device or a communication service outside an access network device, and the configuration parameter type indicates a type of the radio network configuration attribute that is about the terminal device or the communication service and that is needed by a third-party server. The processing unit 1510 is configured to determine a second identifier based on the first identifier. The transceiver unit 1520 is further configured to send the second identifier, the configuration parameter type, and the value of the radio network configuration attribute to the access network device, where the second identifier identifies the terminal device or the communication service inside the access network device.

For another example, the transceiver unit 1520 is configured to receive a first identifier from a management function entity, where the first identifier identifies a terminal device or a communication service outside an access network device. The processing unit 1510 is configured to determine a second identifier based on the first identifier. The transceiver unit 1520 is further configured to send, to the management function entity, the second identifier corresponding to the first identifier, where the second identifier identifies the terminal device or the communication service inside the access network device.

In some possible implementations, the communication apparatus 1500 can accordingly implement the behavior and the functions of the access network device in the foregoing method embodiments. For example, the communication apparatus 1500 may be an access network device, or may be a component (for example, a chip or a circuit) used in the access network device. The transceiver unit 1520 may be configured to perform all receiving or sending operations performed by the access network device in the embodiments shown in FIG. 3 to FIG. 14, for example, S703 in the embodiment shown in FIG. 7, and/or configured to support another process of the technology described in this specification. The processing unit 1510 is configured to perform all operations other than the receiving or sending operations and performed by the access network device in the embodiments shown in FIG. 3 to FIG. 14.

For example, the transceiver unit 1520 is configured to receive a second identifier, data type information, and a return address from a core network device, where the second identifier identifies a terminal device or a communication service inside the access network device, and the data type information indicates a type of radio network performance data that is about the terminal device or the communication service and that is needed by a third-party server. The processing unit 1510 is configured to query for radio network performance data corresponding to the data type information. The transceiver unit 1520 is further configured to send the target radio network performance data to the return address.

For another example, the transceiver unit 1520 is configured to receive a second identifier and data type information from a management function entity, where the second identifier identifies a terminal device or a communication service inside the access network device, and the data type information indicates a type of radio network performance data that is about the terminal device or the communication service and that is needed by a third-party server. The processing unit 1510 is configured to query for radio network performance data. The transceiver unit 1520 is further configured to send the target radio network performance data to the management function entity.

For another example, the transceiver unit 1520 is configured to receive a second identifier, a configuration parameter type, and a value of a radio network configuration attribute from a core network device, where the second identifier identifies a terminal device or a communication service inside the access network device, and the configuration parameter type indicates a type of the radio network configuration attribute that is about the terminal device or the communication service and that is needed by a third-party server. The processing unit 1510 is configured to configure the radio network configuration attribute based on the value of the radio network configuration attribute.

For another example, the transceiver unit 1520 is configured to receive a second identifier, a configuration parameter type, and a value of a radio network configuration attribute from a management function entity, where the second identifier identifies a terminal device or a communication service inside the access network device, and the configuration parameter type indicates a type of the radio network configuration attribute that is about the terminal device or the communication service and that is needed by a third-party server. The processing unit 1510 is configured to configure the radio network configuration attribute based on the value of the radio network configuration attribute.

In some possible implementations, the communication apparatus 1500 can accordingly implement the behavior and the functions of the management function entity in the foregoing method embodiments. For example, the communication apparatus 1500 may be a management function entity, or may be a component (for example, a chip or a circuit) used in the management function entity. The transceiver unit 1520 may be configured to perform all receiving or sending operations performed by the management function entity in the embodiments shown in FIG. 3 to FIG. 14, for example, S301 to S304 in the embodiment shown in FIG. 3, and/or configured to support another process of the technology described in this specification. The processing unit 1510 is configured to perform all operations other than the receiving or sending operations and performed by the management function entity in the embodiments shown in FIG. 3 to FIG. 14.

For example, the transceiver unit 1520 is configured to receive a service request message from a third-party server, where the service request message includes a first identifier and data type information, the first identifier identifies a terminal device or a communication service outside an access network device, and the data type information indicates a type of radio network performance data that is about the terminal device or the communication service and that is needed by the third-party server. The processing unit 1510 is configured to determine a core network device. The transceiver unit 1520 is further configured to send the first identifier and the data type information to the core network device, to enable the core network device to trigger the access network device to provide target radio network performance data for the management function entity. The transceiver unit 1520 is further configured to receive the target radio network performance data from the access network device. The transceiver unit 1520 is further configured to send the target radio network performance data to the third-party server.

For another example, the transceiver unit 1520 is configured to receive a first identifier and data type information from a third-party server, where the first identifier identifies a terminal device or a communication service outside an access network device, and the data type information indicates a type of a radio network configuration attribute that is about the terminal device or the communication service and that is needed by the third-party server. The processing unit 1510 is configured to determine a core network device. The transceiver unit 1520 is further configured to send the first identifier to the core network device. The transceiver unit 1520 is further configured to receive a second identifier from the core network device, where the second identifier identifies the terminal device or the communication service inside the access network device. The transceiver unit 1520 is further configured to send the second identifier and the data type information to the access network device. The transceiver unit 1520 is further configured to receive the radio network configuration attribute from the access network device. The transceiver unit 1520 is further configured to send the radio network configuration attribute to the third-party server.

For another example, the transceiver unit 1520 is configured to receive a service request message from a third-party server, where the service request message includes a first identifier, a configuration parameter type, and a value of a radio network configuration attribute, the first identifier identifies a terminal device or a communication service outside an access network device, and the configuration parameter type indicates a type of the radio network configuration attribute that is about the terminal device or the communication service and that is needed by the third-party server. The processing unit 1510 is configured to determine a core network device. The transceiver unit 1520 is further configured to send the first identifier and the configuration parameter type to the core network device, to enable the core network device to trigger the access network device to configure the radio network configuration attribute.

For another example, the transceiver unit 1520 is configured to receive a first identifier, a configuration parameter type, and a value of a radio network configuration attribute from a third-party server, where the first identifier identifies a terminal device or a communication service outside an access network device, and the configuration parameter type indicates a type of the radio network configuration attribute that is about the terminal device or the communication service and that is needed by the third-party server. The processing unit 1510 is configured to determine a core network device. The transceiver unit 1520 is further configured to send the first identifier to the core network device. The transceiver unit 1520 is further configured to receive a second identifier from the core network device, where the second identifier identifies the terminal device or the communication service inside the access network device. The transceiver unit 1520 is further configured to send the second identifier, the configuration parameter type, and the value of the radio network configuration attribute to the access network device.

For operations performed by the processing unit 1510 and the transceiver unit 1520, refer to the related descriptions in the foregoing method embodiments.

It should be understood that the processing unit 1510 in this embodiment of this application may be implemented by a processor or a processor-related circuit component, and the transceiver unit 1520 may be implemented by a transceiver, a transceiver-related circuit component, or a communication interface.

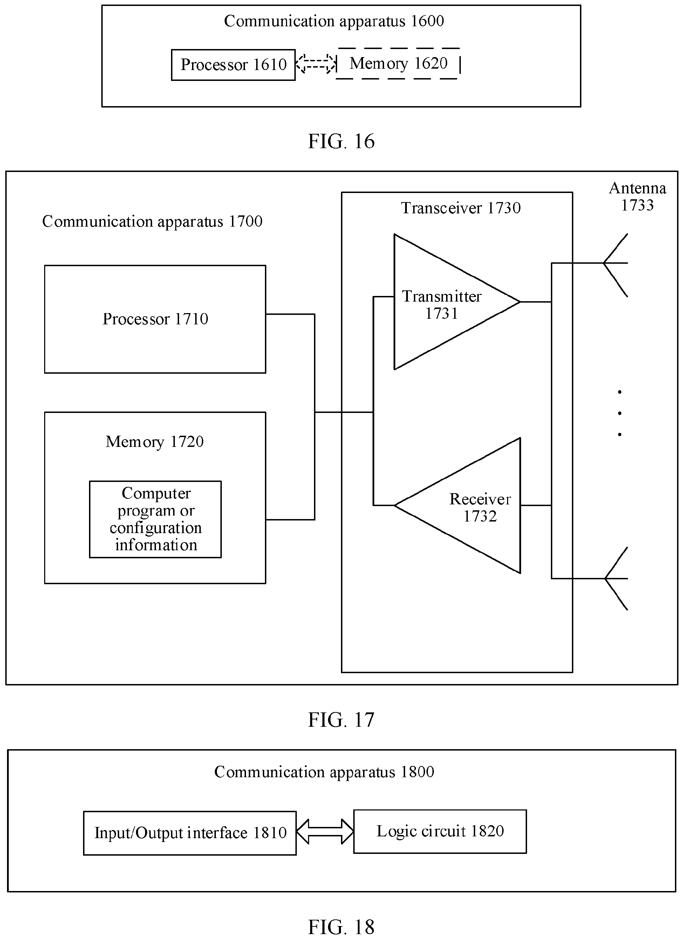

Based on a same concept, as shown in FIG. 16, an embodiment of this application provides a communication apparatus 1600. The communication apparatus 1600 includes a processor 1610. Optionally, the communication apparatus 1600 may further include a memory 1620, configured to store instructions executed by the processor 1610, input data needed by the processor 1610 to run the instructions, or data generated after the processor 1610 runs the instructions. The processor 1610 may implement the methods shown in the foregoing method embodiments by using the instructions stored in the memory 1620.

Based on a same concept, as shown in FIG. 17, an embodiment of this application provides a communication apparatus 1700. The communication apparatus 1700 may be a chip or a chip system. Optionally, in this embodiment of this application, the chip system may include a chip, or may include the chip and another discrete component.

The communication apparatus 1700 may include at least one processor 1710. The processor 1710 is coupled to a memory. Optionally, the memory may be located inside the apparatus, or may be located outside the apparatus. For example, the communication apparatus 1700 may further include at least one memory 1720. The memory 1720 stores a necessary computer program, configuration information, a computer program or instructions, and/or data for implementing any one of the foregoing embodiments. The processor 1710 may execute the computer program stored in the memory 1720, to complete the method in any one of the foregoing embodiments.

Coupling in embodiments of this application may be indirect coupling or a communication connection between apparatuses, units, or modules, may be in an electrical form, a mechanical form, or another form, and is for information exchange between the apparatuses, the units, or the modules. The processor 1710 may operate in collaboration with the memory 1720. A specific connection medium between a transceiver 1730, the processor 1710, and the memory 1720 is not limited in this embodiment of this application.

The communication apparatus 1700 may further include the transceiver 1730, and the communication apparatus 1700 may exchange information with another device via the transceiver 1730. The transceiver 1730 may be a circuit, a bus, a transceiver, or any other apparatus that may be configured to exchange information, or is referred to as a signal transceiver unit. As shown in FIG. 17, the transceiver 1730 includes a transmitter 1731, a receiver 1732, and an antenna 1733. **In** addition, when the communication apparatus 1700 is a chip-type apparatus or a circuit, the transceiver in the communication apparatus 1700 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1700 may be used in a core network device. Specifically, the communication apparatus 1700 may be a core network device, or may be an apparatus that can support the core network device in implementing functions of the core network device in any one of the foregoing embodiments. The memory 1720 stores a necessary computer program, a computer program or instructions, and/or data for implementing the functions of the core network device in any one of the foregoing embodiments. The processor 1710 may execute the computer program stored in the memory 1720, to complete the method performed by the core network device in any one of the foregoing embodiments. Used in the core network device, the transmitter 1731 in the communication apparatus 1700 may be configured to send one or more of a first identifier, a second identifier, data type information, and a value of a radio network configuration attribute through the antenna 1733. Used in the core network device, the receiver 1732 in the communication apparatus 1700 may be configured to receive one or more of the first identifier, the data type information, and the value of the radio network configuration attribute through the antenna 1733.

In another possible implementation, the communication apparatus 1700 may be used in an access network device. Specifically, the communication apparatus 1700 may be an access network device, or may be an apparatus that can support the access network device in implementing the functions of the access network device in any one of the foregoing embodiments. The memory 1720 stores a necessary computer program, a computer program or instructions, and/or data for implementing the functions of the access network device in any one of the foregoing embodiments. The processor 1710 may execute the computer program stored in the memory 1720, to complete the method performed by the access network device in any one of the foregoing embodiments. Used in the access network device, the transmitter 1731 in the communication apparatus 1700 may be configured to send target radio network performance data through the antenna 1733. Used in the access network device, the receiver 1732 in the communication apparatus 1700 may be configured to receive one or more of a first identifier, a second identifier, data type information, and a value of a radio network configuration attribute through the antenna 1733.

In another possible implementation, the communication apparatus 1700 may be used in a management function entity. Specifically, the communication apparatus 1700 may be a management function entity, or may be an apparatus that can support the management function entity in implementing the functions of the management function entity in any one of the foregoing embodiments. The memory 1720 stores a necessary computer program, a computer program or instructions, and/or data for implementing the functions of the management function entity in any one of the foregoing embodiments. The processor 1710 may execute the computer program stored in the memory 1720, to complete the method performed by the management function entity in any one of the foregoing embodiments. Used in a management function entity, the receiver 1732 in the communication apparatus 1700 may be configured to receive radio network performance data through the antenna 1733. Used in a management function entity, the transmitter 1731 in the communication apparatus 1700 may be configured to send one or more of a first identifier, a second identifier, data type information, and a value of a radio network configuration attribute through the antenna 1733.

The communication apparatus 1700 provided in this embodiment may be used in the core network device, to complete the method performed by the core network device; used in the access network device, to complete the method performed by the access network device; or used in the management function entity, to complete the method performed by the management function entity. Therefore, for technical effects that can be achieved by the communication apparatus 1700, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Based on the foregoing embodiments, refer to FIG. 18. An embodiment of this application further provides another communication apparatus 1800, including an input/output interface 1810 and a logic circuit 1820. The input/output interface 1810 is configured to receive code instructions and transmit the code instructions to the logic circuit 1820. The logic circuit 1820 is configured to run the code instructions to perform the method performed by the core network device, the access network device, or the management function entity in any one of the foregoing embodiments.

The following describes in detail an operation performed by the communication apparatus used in the core network device, the access network device, or the management function entity.

In an optional implementation, the communication apparatus 1800 may be used in the core network device, to perform the methods performed by the core network device, specifically, for example, the methods performed by the core network device in the embodiments shown in FIG. 3 to FIG. 14.

For example, the input/output interface 1810 is configured to input a first identifier and data type information, where the first identifier identifies a terminal device or a service data flow outside an access network device, and the data type information indicates a type of radio network performance data that is about the terminal device or the service data flow and that is needed by a third-party server. The logic circuit 1820 is configured to determine a second identifier based on the first identifier. The input/output interface 1810 is further configured to output the second identifier, the data type information, and a return address to the access network device, where the second identifier identifies the terminal device or the service data flow inside the access network device; and the return address is an address of an exposure governance management function entity, and indicates the access network device to output radio network performance data to the return address.

For another example, the input/output interface 1810 is configured to input a first identifier from an exposure governance management function entity, where the first identifier identifies a terminal device or a service data flow outside an access network device. The logic circuit 1820 is configured to determine a second identifier based on the first identifier. The input/output interface 1810 is further configured to output, to the exposure governance management function entity, the second identifier corresponding to the first identifier, where the second identifier identifies the terminal device or the service data flow inside the access network device.

For another example, the input/output interface 1810 is configured to input a first identifier, a configuration parameter type, and a value of a radio network configuration attribute, where the first identifier identifies a terminal device or a service data flow outside an access network device, and the configuration parameter type indicates a type of the radio network configuration attribute that is about the terminal device or the service data flow and that is needed by a third-party server. The logic circuit 1820 is configured to determine a second identifier based on the first identifier. The input/output interface 1810 is further configured to output the second identifier, the configuration parameter type, and the value of the radio network configuration attribute to the access network device, where the second identifier identifies the terminal device or the service data flow inside the access network device; and

For another example, the input/output interface 1810 is configured to input a first identifier from an exposure governance management function entity, where the first identifier identifies a terminal device or a service data flow outside an access network device. The logic circuit 1820 is configured to determine a second identifier based on the first identifier. The input/output interface 1810 is further configured to output, to the exposure governance management function entity, the second identifier corresponding to the first identifier, where the second identifier identifies the terminal device or the service data flow inside the access network device.

In another optional implementation, the communication apparatus 1800 may be used in the access network device, to perform the methods performed by the access network device, specifically, for example, the methods performed by the access network device in the method embodiments shown in FIG. 3 to FIG. 14.

For example, the input/output interface 1810 is configured to input a second identifier, data type information, and a return address from a core network device, where the second identifier identifies a terminal device or a service data flow inside the access network device, and the data type information indicates a type of radio network performance data that is about the terminal device or the service data flow and that is needed by a third-party server. The logic circuit 1820 is configured to query for radio network performance data corresponding to the data type information. The input/output interface 1810 is further configured to output the radio network performance data to the return address.

For another example, the input/output interface 1810 is configured to input a second identifier and data type information from an exposure governance management function entity, where the second identifier identifies a terminal device or a service data flow inside the access network device, and the data type information indicates a type of radio network performance data that is about the terminal device or the service data flow and that is needed by a third-party server. The logic circuit 1820 is configured to query for radio network performance data. The input/output interface 1810 is further configured to output the radio network performance data to the exposure governance management function entity.

For another example, the input/output interface 1810 is configured to input a second identifier, a configuration parameter type, and a value of a radio network configuration attribute from a core network device, where the second identifier identifies a terminal device or a service data flow inside the access network device, and the configuration parameter type indicates a type of the radio network configuration attribute that is about the terminal device or the service data flow and that is needed by a third-party server. The logic circuit 1820 is configured to configure the radio network configuration attribute based on the value of the radio network configuration attribute.

For another example, the input/output interface 1810 is configured to input a second identifier, a configuration parameter type, and a value of a radio network configuration attribute from an exposure governance management function entity, where the second identifier identifies a terminal device or a service data flow inside the access network device, and the configuration parameter type indicates a type of the radio network configuration attribute that is about the terminal device or the service data flow and that is needed by a third-party server. The logic circuit 1820 is configured to configure the radio network configuration attribute based on the value of the radio network configuration attribute.

In another optional implementation, the communication apparatus 1800 may be used in the exposure governance management function entity, to perform the methods performed by the exposure governance management function entity, specifically, for example, the methods performed by the exposure governance management function entity in the method embodiments shown in FIG. 3 to FIG. 14.

For example, the input/output interface 1810 is configured to input a service request message from a third-party server, where the service request message includes a first identifier and data type information, the first identifier identifies a terminal device or a service data flow outside an access network device, and the data type information indicates a type of radio network performance data that is about the terminal device or the service data flow and that is needed by the third-party server. The logic circuit 1820 is configured to determine a core network device. The input/output interface 1810 is further configured to output the first identifier and the data type information to the core network device, to enable the core network device to trigger the access network device to provide radio network performance data for the exposure governance management function entity. The input/output interface 1810 is further configured to input the radio network performance data from the access network device. The input/output interface 1810 is further configured to output the radio network performance data to the third-party server.

For another example, the input/output interface 1810 is configured to input a first identifier and data type information from a third-party server, where the first identifier identifies a terminal device or a service data flow outside an access network device, and the data type information indicates a type of radio network performance data that is about the terminal device or the service data flow and that is needed by the third-party server. The logic circuit 1820 is configured to determine a core network device. The input/output interface 1810 is further configured to output the first identifier to the core network device. The input/output interface 1810 is further configured to input a second identifier from the core network device, where the second identifier identifies the terminal device or the service data flow inside the access network device. The input/output interface 1810 is further configured to output the second identifier and the data type information to the access network device. The input/output interface 1810 is further configured to input radio network performance data from the access network device. The input/output interface 1810 is further configured to output the radio network performance data to the third-party server.

For another example, the input/output interface 1810 is configured to input a service request message from a third-party server, where the service request message includes a first identifier, a configuration parameter type, and a value of a radio network configuration attribute, the first identifier identifies a terminal device or a service data flow outside an access network device, and the configuration parameter type indicates a type of the radio network configuration attribute that is about the terminal device or the service data flow and that is needed by the third-party server. The logic circuit 1820 is configured to determine a core network device. The input/output interface 1810 is further configured to output the first identifier and the configuration parameter type to the core network device, to enable the core network device to trigger the access network device to configure the radio network configuration attribute.

For another example, the input/output interface 1810 is configured to input a first identifier, a configuration parameter type, and a value of a radio network configuration attribute from a third-party server, where the first identifier identifies a terminal device or a service data flow outside an access network device, and the configuration parameter type indicates a type of the radio network configuration attribute that is about the terminal device or the service data flow and that is needed by the third-party server. The logic circuit 1820 is configured to determine a core network device. The input/output interface 1810 is further configured to output the first identifier to the core network device. The input/output interface 1810 is further configured to input a second identifier from the core network device, where the second identifier identifies the terminal device or the service data flow inside the access network device. The input/output interface 1810 is further configured to output the second identifier, the configuration parameter type, and the value of the radio network configuration attribute to the access network device.

The communication apparatus 1800 provided in this embodiment may be used in the core network device, to complete the method performed by the core network device; used in the access network device, to complete the method performed by the access network device; or used in the management function entity, to complete the method performed by the management function entity. Therefore, for technical effects that can be achieved by the communication apparatus 1800, refer to the foregoing method embodiments. Details are not described herein again.

Based on the foregoing embodiments, an embodiment of this application further provides a communication system. The communication system includes at least one communication apparatus used in a core network device, at least one communication apparatus used in an access network device, and at least one communication apparatus used in a management function entity. For technical effects that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the core network device or the method performed by the access network device or the management function entity in any one of the foregoing embodiments is enabled to be implemented. The computer-readable storage medium may include any medium that can store program code, such as a USB flash drive, a removable hard disk drive, a read-only memory, a random access memory, a magnetic disk, or an optical disc.

To implement functions of the communication apparatuses in FIG. 16 to FIG. 18, an embodiment of this application further provides a chip, including a processor, configured to support the communication apparatus in implementing the functions related to the core network device, the access network device, or the management function entity in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be for implementing each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations of embodiments of this application provided that they fall within the scope of the claims of this application and their equivalent technologies.

## Claims

1. A data query method, comprising:
receiving a first identifier and data type information from a third-party server, wherein the first identifier identifies a terminal device or a communication service outside an access network device, and the data type information indicates a type of radio network performance data that is about the terminal device or the communication service and that is needed by the third-party server;
obtaining a second identifier based on the first identifier, wherein the second identifier identifies the terminal device or the communication service inside the access network device;
obtaining target radio network performance data about the terminal device or the communication service based on the second identifier, wherein the target radio network performance data matches the data type information; and
sending the target radio network performance data to the third-party server.

2. The method according to claim 1, wherein the receiving a first identifier and data type information from a third-party server comprises:
receiving, by a management function entity, a service request message from the third-party server, wherein the service request message comprises the first identifier and the data type information.

3. The method according to claim 2, wherein the obtaining a second identifier based on the first identifier comprises: sending, by the management function entity, the first identifier to an access and mobility management function network element; obtaining, by the access and mobility management function network element, the second identifier based on the first identifier; and receiving, by the management function entity, the second identifier from the access and mobility management function network element;
the obtaining target radio network performance data about the terminal device or the communication service based on the second identifier comprises: sending, by the management function entity, the second identifier and the data type information to the access network device; and receiving, by the management function entity, the target radio network performance data from the access network device; and
the sending the target radio network performance data to the third-party server comprises: sending, by the management function entity, a first service response message to the third-party server, wherein the first service response message comprises the target radio network performance data.

4. The method according to claim 2, wherein the method further comprises:
sending, by the management function entity, a first radio network performance data request message to an access and mobility management function network element, wherein the radio network performance data request message comprises the first identifier and the data type information;
the obtaining a second identifier based on the first identifier comprises: obtaining, by the access and mobility management function network element, the second identifier through query based on a correspondence between the first identifier and the second identifier;
the obtaining target radio network performance data about the terminal device or the communication service based on the second identifier comprises: receiving, by the access network device, a second radio network performance data request message from the access and mobility management function network element, wherein the second radio network performance data request message comprises a return address and the second identifier, and the return address is an address of the management function entity; and obtaining, by the access network device, the target radio network performance data about the terminal device or the communication service based on the second identifier; and
the sending the target radio network performance data to the third-party server comprises: sending, by the access network device, the target radio network performance data to the management function entity based on the return address; and sending, by the management function entity, the target radio network performance data to the third-party server .

5. The method according to claim 2, wherein the method further comprises:
sending, by the management function entity, a first radio network performance data request message to a network exposure function network element, wherein the first radio network performance data request message comprises the first identifier and the data type information;
the obtaining a second identifier based on the first identifier comprises: sending, by the network exposure function network element, the first identifier and the data type information to an access and mobility management function network element; and obtaining, by the access and mobility management function network element, the second identifier through query based on a correspondence between the first identifier and the second identifier;
the obtaining target radio network performance data about the terminal device or the communication service based on the second identifier comprises: receiving, by the access network device, a second radio network performance data request message from the access and mobility management function network element, wherein the second radio network performance data request message comprises a return address and the second identifier, and the return address is an address of the management function entity; and obtaining, by the access network device, the target radio network performance data about the terminal device or the communication service based on the second identifier; and
the sending the target radio network performance data to the third-party server comprises: sending, by the access network device, the target radio network performance data to the management function entity based on the return address; and sending, by the management function entity, the target radio network performance data to the third-party server.

6. The method according to claim 2, wherein the obtaining a second identifier based on the first identifier comprises: sending, by the management function entity, the first identifier and a return address to a network exposure function network element, wherein the return address is an address of the management function entity; obtaining, by an access and mobility management function network element, the second identifier through query based on a correspondence between the first identifier and the second identifier; and sending, by the access and mobility management function network element, the second identifier to the management function entity based on the return address;
the obtaining target radio network performance data about the terminal device or the communication service based on the second identifier comprises: receiving, by the access network device, the return address and the second identifier from the management function entity; and obtaining, by the access network device, the target radio network performance data about the terminal device or the communication service based on the second identifier; and
the sending the target radio network performance data to the third-party server comprises: sending, by the access network device, the target radio network performance data to the management function entity based on the return address; and sending, by the management function entity, the target radio network performance data to the third-party server.

7. The method according to claim **1,** wherein the receiving a first identifier and data type information from a third-party server comprises: receiving, by a network exposure function network element, a second service request message from the third-party server, wherein the second service request message comprises the first identifier and the data type information; and sending, by the network exposure function network element, the first identifier and the data type information to an access and mobility management function network element;
the obtaining a second identifier based on the first identifier comprises: obtaining, by the access and mobility management function network element, the second identifier through query based on a correspondence between the first identifier and the second identifier;
the obtaining target radio network performance data about the terminal device or the communication service based on the second identifier comprises: receiving, by the access network device, a return address and the second identifier from the access and mobility management function network element; and obtaining, by the access network device, the target radio network performance data about the terminal device or the communication service based on the second identifier; and
the sending the target radio network performance data to the third-party server comprises: sending, by the access network device, the target radio network performance data to a management function entity; and sending, by the management function entity, a second service response message to the third-party server, wherein the second service response message comprises the target radio network performance data.

8. The method according to claim 2, wherein the receiving, by a management function entity, a service request message from the third-party server comprises:
receiving, by an exposure governance management function entity, the service request message from the third-party server; and
receiving, by a performance governance management function entity, the service request message from the exposure governance management function entity.

9. The method according to claim 8, wherein the obtaining a second identifier based on the first identifier comprises:
sending, by the performance governance management function entity, the first identifier to an access and mobility management function network element; obtaining, by the access and mobility management function network element, the second identifier based on the first identifier; and receiving, by the performance governance management function entity, the second identifier from the access and mobility management function network element;
the obtaining target radio network performance data about the terminal device or the communication service based on the second identifier comprises: sending, by the performance governance management function entity, the second identifier and the data type information to the access network device; and receiving, by the performance governance management function entity, the target radio network performance data from the access network device; and
the sending the target radio network performance data to the third-party server comprises: sending, by the performance governance management function entity, a service response message to the exposure governance management function entity, wherein the service response message comprises the target radio network performance data; and sending, by the exposure governance management function entity, the service response message to the third-party server.

10. The method according to claim 8, wherein the method further comprises:
sending, by the performance management function entity, a first radio network performance data request message to an access and mobility management function network element, wherein the first radio network performance data request message comprises the first identifier and the data type information;
the obtaining a second identifier based on the first identifier comprises: obtaining, by the access and mobility management function network element, the second identifier through query based on a correspondence between the first identifier and the second identifier;
the obtaining target radio network performance data about the terminal device or the communication service based on the second identifier comprises: receiving, by the access network device, a second radio network performance data request message from the access and mobility management function network element, wherein the second radio network performance data request message comprises a return address and the second identifier, and the return address is an address of the management function entity; and obtaining, by the access network device, the target radio network performance data about the terminal device or the communication service based on the second identifier; and
the sending the target radio network performance data to the third-party server comprises: sending, by the access network device, the target radio network performance data to the management function entity based on the return address; and sending, by the management function entity, the target radio network performance data to the third-party server.

11. A data query method, comprising:
receiving, by a core network device, a first identifier and data type information, wherein the first identifier identifies a terminal device or a communication service outside an access network device, and the data type information indicates a type of radio network performance data that is about the terminal device or the communication service and that is needed by a third-party server; and
sending, by the core network device, a second identifier, the data type information, and a return address to the access network device, wherein the second identifier identifies the terminal device or the communication service inside the access network device; and the return address is an address of a management function entity, and indicates the access network device to send target radio network performance data to the return address, wherein the target radio network performance data matches the data type information.

12. The method according to claim 11, wherein the first identifier is determined based on at least one of the following: a slice identifier, a service type, a service identifier, a subscription permanent identifier SUPI, a generic public subscription identifier GPSI, an external group identifier, and an identity address of the terminal device.

13. The method according to claim 11 or 12, wherein the second identifier is at least one of the following: a radio network temporary identity RNTI, a globally unique temporary identity GUTI, an internal group identifier, a 5G-system 5G-S-TMSI, a NGAP UE ID, a quality of service class identifier QCI, a 5QI, and single network slice selection assistance information S-NSSAI.

14. The method according to any one of claims 11 to 13, wherein the data type information comprises at least one of the following: a throughput, delay information, radio available bandwidth estimation information, delay estimation information, and high-precision timing information.

15. The method according to any one of claims 11 to 14, wherein the core network device comprises an access and mobility management function network element and a network exposure function network element, and the receiving, by a core network device, a first identifier and data type information comprises:
receiving, by the network exposure function network element, the first identifier and the data type information from the management device; and
sending, by the network exposure function network element, the first identifier and the data type information to the access and mobility management function network element;
the access and mobility management function network element determines the second identifier based on the first identifier; and
the sending, by the core network device, a second identifier, the data type information, and a return address to the access network device comprises:
sending, by the access and mobility management function network element, the second identifier, the data type information, and the return address to the access network device.

16. The method according to any one of claims 11 to 14, wherein the core network device comprises an access and mobility management function network element, and the receiving, by a core network device, a first identifier and data type information comprises:
receiving, by the access and mobility management function network element, the first identifier and the data type information from the management device;
the access and mobility management function network element determines the second identifier based on the first identifier; and
the sending, by the core network device, a second identifier, the data type information, and a return address to the access network device comprises:
sending, by the access and mobility management function network element, the second identifier, the data type information, and the return address to the access network device.

17. The method according to any one of claims 11 to 14, wherein the core network device comprises a network exposure function network element and an access and mobility management function network element, and the receiving, by a core network device, a first identifier and data type information comprises:
receiving, by the network exposure function network element, the first identifier and the data type information from the third-party server; and
sending, by the network exposure function network element, the first identifier and the data type information to the access and mobility management function network element;
the access and mobility management function network element determines the second identifier based on the first identifier; and
the sending, by the core network device, a second identifier, the data type information, and a return address to the access network device comprises:
sending, by the access and mobility management function network element, the second identifier, the data type information, and the return address to the access network device.

18. A data query method, comprising:
receiving, by an access network device, a second identifier, data type information, and a return address from a core network device, wherein the second identifier identifies a terminal device or a communication service inside the access network device, and the data type information indicates a type of radio network performance data that is about the terminal device or the communication service and that is needed by a third-party server;
querying, by the access network device, for target radio network performance data based on the second identifier, wherein the target radio network performance data matches the data type information; and
sending, by the access network device, the target radio network performance data to the return address.

19. The method according to claim 18, wherein the second identifier is at least one of the following: a radio network temporary identity RNTI, a globally unique temporary user equipment UE identity GUTI, an internal group identifier, a 5G-system architecture evolution temporary UE identifier 5G-S-TMSI, an application layer protocol UE identity NGAP UE ID, a quality of service class identifier QCI, a 5QI, and single network slice selection assistance information S-NSSAI.

20. The method according to claim 18 or 19, wherein the data type information comprises at least one of the following: a throughput, delay information, radio available bandwidth estimation information, delay estimation information, and high-precision timing information.

21. A data query method, comprising:
receiving, by a management device, a service request message from a third-party server, wherein the service request message comprises a first identifier and data type information, the first identifier identifies a terminal device or a communication service outside an access network device, and the data type information indicates a type of radio network performance data that is about the terminal device or the communication service and that is needed by the third-party server;
sending, by the management device, the first identifier and the data type information to a core network device, to enable the core network device to trigger the access network device to provide target radio network performance data for the management device, wherein the target radio network performance data matches the data type information;
receiving, by the management device, the target radio network performance data from the access network device; and
sending, by the management device, the target radio network performance data to the third-party server.

22. The method according to claim 21, wherein the first identifier is determined based on at least one of the following: a slice identifier, a service type, a service identifier, a subscription permanent identifier SUPI, a generic public subscription identifier GPSI, an external group identifier, and an identity address of the terminal device.

23. The method according to claim 21 or 22, wherein the data type information comprises at least one of the following: a throughput, delay information, radio available bandwidth estimation information, delay estimation information, and high-precision timing information.

24. A data query method, comprising:
receiving, by a core network device, a first identifier from a management device, wherein the first identifier identifies a terminal device or a communication service outside an access network device; and
sending, by the core network device to the management device, a second identifier corresponding to the first identifier, wherein the second identifier identifies the terminal device or the communication service inside the access network device.

25. The method according to claim 24, wherein the first identifier is determined based on at least one of the following: a slice identifier, a service type, a service identifier, a subscription permanent identifier SUPI, a generic public subscription identifier GPSI, an external group identifier, and an identity address of the terminal device.

26. The method according to claim 24 or 25, wherein the second identifier is at least one of the following: a radio network temporary identity RNTI, a globally unique temporary user equipment UE identity GUTI, an internal group identifier, a 5G-system architecture evolution temporary UE identifier 5G-S-TMSI, an application layer protocol UE identity NGAP UE ID, a quality of service class identifier QCI, a 5QI, and single network slice selection assistance information S-NSSAI.

27. The method according to claim 25 or 26, wherein data type information comprises at least one of the following: a throughput, delay information, radio available bandwidth estimation information, delay estimation information, and high-precision timing information.

28. A data query method, comprising:
receiving, by a management device, a first identifier and data type information from a third-party server, wherein the first identifier identifies a terminal device or a communication service outside an access network device, and the data type information indicates a type of radio network performance data that is about the terminal device or the communication service and that is needed by the third-party server;
sending, by the management device, the first identifier to a core network device; and receiving, by the management device, a second identifier from the core network device, wherein the second identifier identifies the terminal device or the communication service inside the access network device;
sending, by the management device, the second identifier and the data type information to the access network device;
receiving, by the management device, target radio network performance data from the access network device, wherein the target radio network performance data matches the data type information; and
sending, by the management device, the target radio network performance data to the third-party server.

29. The method according to claim 28, wherein the first identifier is determined based on at least one of the following: a slice identifier, a service type, a service identifier, a subscription permanent identifier SUPI, a generic public subscription identifier GPSI, an external group identifier, and an identity address of the terminal device.

30. The method according to claim 28 or 29, wherein the second identifier is at least one of the following: a radio network temporary identity RNTI, a globally unique temporary user equipment UE identity GUTI, an internal group identifier, a 5G-system architecture evolution temporary UE identifier 5G-S-TMSI, an application layer protocol UE identity NGAP UE ID, a quality of service class identifier QCI, a 5QI, and single network slice selection assistance information S-NSSAI.

31. The method according to any one of claims 28 to 30, wherein the data type information comprises at least one of the following: a throughput, delay information, radio available bandwidth estimation information, delay estimation information, and high-precision timing information.

32. The method according to any one of claims 28 to 31, wherein the management device comprises a performance management device and an exposure governance management device, and the receiving, by a management device, a first identifier and data type information from a third-party server comprises:
receiving, by the exposure governance management device, the first identifier and the data type information from the third-party server; and
sending, by the exposure governance management device, the first identifier and the data type information to the performance management device;
the sending, by the management device, the first identifier to a core network device comprises:
sending, by the performance management device, the first identifier to the core network device;
the sending, by the management device, the second identifier and the data type information to the access network device comprises:
sending, by the performance management device, the second identifier and the data type information to the access network device;
the receiving, by the management device, target radio network performance data from the access network device comprises:
receiving, by the performance management device, the target radio network performance data from the access network device; and
the sending, by the management device, the target radio network performance data to the third-party server comprises:
sending, by the performance management device, the target radio network performance data to the exposure governance management device; and
sending, by the exposure governance management device, the target radio network performance data to the third-party server.

33. A data query method, comprising:
receiving, by an access network device, a second identifier and data type information from a management device, wherein the second identifier identifies a terminal device or a communication service inside the access network device, and the data type information indicates a type of radio network performance data that is about the terminal device or the communication service and that is needed by a third-party server;
querying, by the access network device, for target radio network performance data based on the second identifier, wherein the target radio network performance data matches the data type information; and
sending, by the access network device, the target radio network performance data to the management device.

34. The method according to claim 33, wherein the second identifier is at least one of the following: a radio network temporary identity RNTI, a globally unique temporary user equipment UE identity GUTI, an internal group identifier, a 5G-system architecture evolution temporary UE identifier 5G-S-TMSI, an application layer protocol UE identity NGAP UE ID, a quality of service class identifier QCI, a 5QI, and single network slice selection assistance information S-NSSAI.

35. The method according to claim 33 or 34, wherein the data type information comprises at least one of the following: a throughput, delay information, radio available bandwidth estimation information, delay estimation information, and high-precision timing information.

36. A communication apparatus, comprising a unit configured to perform the method according to any one of claims 1 to 10, comprising a unit configured to perform the method according to any one of claims 11 to 17, comprising a unit configured to perform the method according to any one of claims 18 to 20, comprising a unit configured to perform the method according to any one of claims 21 to 23, comprising a unit configured to perform the method according to any one of claims 24 to 27, comprising a unit configured to perform the method according to any one of claims 28 to 32, or comprising a unit configured to perform the method according to any one of claims 33 to 35.

37. A communication apparatus, comprising a processor and a memory, wherein
the memory is configured to store a computer program or instructions; and
the processor is configured to execute the computer program or the instructions in the memory, to enable the apparatus to perform the method according to any one of claims 1 to 10, to enable the apparatus to perform the method according to any one of claims 11 to 17, to enable the apparatus to perform the method according to any one of claims 18 to 20, to enable the apparatus to perform the method according to any one of claims 21 to 23, to enable the apparatus to perform the method according to any one of claims 24 to 27, to enable the apparatus to perform the method according to any one of claims 28 to 32, or to enable the apparatus to perform the method according to any one of claims 33 to 35.

38. A computer-readable storage medium, wherein the computer-readable storage medium stores computer-executable instructions; and when the computer-executable instructions are invoked by an electronic apparatus, the electronic apparatus is enabled to perform the method according to any one of claims 1 to 10, the electronic apparatus is enabled to perform the method according to any one of claims 11 to 17, the electronic apparatus is enabled to perform the method according to any one of claims 18 to 20, the electronic apparatus is enabled to perform the method according to any one of claims 21 to 23, the electronic apparatus is enabled to perform the method according to any one of claims 24 to 27, the electronic apparatus is enabled to perform the method according to any one of claims 28 to 32, or the electronic apparatus is enabled to perform the method according to any one of claims 33 to 35.

39. A computer program product, comprising computer-executable instructions, wherein when the computer-executable instructions are run on a computer, the computer is enabled to perform the method according to any one of claims 1 to 10, the computer is enabled to perform the method according to any one of claims 11 to 17, the computer is enabled to perform the method according to any one of claims 18 to 20, the computer is enabled to perform the method according to any one of claims 21 to 23, the computer is enabled to perform the method according to any one of claims 24 to 27, the computer is enabled to perform the method according to any one of claims 28 to 32, or the computer is enabled to perform the method according to any one of claims 33 to 35.
